(19) Europäisches Patentamt / European Patent Office / Office européen des brevets

(11) **EP 3 928 447 B1**

(12) **FASCICULE DE BREVET EUROPEEN**

(45) Date de publication et mention de la délivrance du brevet:
**09.08.2023 Bulletin 2023/32**

(21) Numéro de dépôt: **20709653.8**

(22) Date de dépôt: **19.02.2020**

(51) Classification Internationale des Brevets (IPC):
*H04B 7/022* (2017.01)    *H04B 7/0452* (2017.01)
*H04L 1/00* (2006.01)    *H04J 11/00* (2006.01)
*H04W 52/14* (2009.01)    *H04W 52/42* (2009.01)
*H04W 52/20* (2009.01)    *H04W 92/20* (2009.01)

(52) Classification Coopérative des Brevets (CPC):
**H04L 1/0003; H04B 7/022; H04B 7/0452;**
**H04J 11/0056; H04L 1/0009; H04L 1/0023;**
H04J 11/004; H04W 52/143; H04W 52/20;
H04W 52/42; H04W 92/20

(86) Numéro de dépôt international:
**PCT/FR2020/050308**

(87) Numéro de publication internationale:
**WO 2020/169926 (27.08.2020 Gazette 2020/35)**

(54) **RÉDUCTION D'INTERFÉRENCE DEPUIS UN PREMIER POINT D'ACCÈS PAR UN DEUXIÈME POINT D'ACCÈS UTILISANT UNE DONNÉE REPRÉSENTATIVE DES PARAMÈTRES DE TRANSMISSION**

INTERFERENZVERMINDERUNG VON EINEM ERSTEN ZUGANGSPUNKT DURCH EINEN ZWEITEN ZUGANGSPUNKT UNTER VERWENDUNG EINES FÜR DIE ÜBERTRAGUNGSPARAMETER REPRÄSENTATIVEN DATUMS

INTERFERENCE REDUCTION FROM A FIRST ACCESS POINT BY A SECOND ACCESS POINT USING A DATUM REPRESENTATIVE OF THE TRANSMISSION PARAMETERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2019 FR 1901833**

(43) Date de publication de la demande:
**29.12.2021 Bulletin 2021/52**

(73) Titulaire: **Orange**
**92130 Issy-les-Moulineaux (FR)**

(72) Inventeurs:
• **ARRANO SCHARAGER, Hernan Felipe**
**92326 CHÂTILLON CEDEX (FR)**
• **COUPECHOUX, Marceau**
**94200 IVRY SUR SEINE (FR)**
• **KELIF, Jean-Marc**
**92326 CHÂTILLON CEDEX (FR)**

(74) Mandataire: **Cabinet Beau de Loménie**
**158, rue de l'Université**
**75340 Paris Cedex 07 (FR)**

(56) Documents cités:
EP-A1- 3 416 344    WO-A1-2015/060510
US-A1- 2018 091 282

• LI RONGPENG ET AL: "A Tomography of Full-Duplex Cellular Networks", 2017 IEEE 85TH VEHICULAR TECHNOLOGY CONFERENCE (VTC SPRING), IEEE, 4 juin 2017 (2017-06-04), pages 1-7, XP033254353, DOI: 10.1109/VTCSPRING.2017.8108362

**Description**

Technique antérieure

L'invention se rapporte au domaine général des télécommunications.

Elle offre plus particulièrement une solution permettant à un point d'accès à un réseau de communication sans fil de limiter (réduire ou supprimer), dans les signaux qu'il reçoit en liaison montante de terminaux qui lui sont connectés, les interférences causées par d'autres points d'accès du réseau lorsque ceux-ci communiquent en liaison descendante. De telles interférences sont par exemple causées par l'utilisation en liaison descendante par ces autres points d'accès des mêmes ressources radio que lesdits terminaux. Une ressource radio ou ressource de communication au sens de l'invention peut désigner tout type de ressource pouvant être utilisée par un terminal ou par un point d'accès au réseau pour transporter des données sur ce réseau, comme par exemple une fréquence, une bande de fréquences, une longueur d'onde, un intervalle de temps, un couple constitué d'une fréquence et d'un intervalle de temps, etc.

On désigne ici par liaison « montante » ou canal « montant », un canal de communication connectant un terminal à un point d'accès au réseau de communication sans fil considéré que le terminal utilise pour envoyer des données au point d'accès.

De façon similaire, on désigne par liaison « descendante » ou canal « descendant », un canal de communication connectant un point d'accès au réseau de communication sans fil à un terminal que le point d'accès utilise pour envoyer des données au terminal.

L'invention s'applique notamment de façon avantageuse lorsqu'au moins une partie des points d'accès au réseau de communication utilise un mode de communication duplex intégral, aussi plus communément connu sous le nom de « Full Duplex » (noté parfois FD dans la suite de la description). De façon connue en soi, un dispositif de communication fonctionnant en mode full duplex peut émettre et recevoir des données en utilisant les mêmes ressources radio, par exemple une même ressource temps-fréquence (aussi communément désignée par bloc de ressource ou Ressource Block (RB) en anglais).

Aucune limitation n'est toutefois attachée au réseau de communication sans fil auquel peut être appliquée l'invention (par exemple un réseau mobile cellulaire de type 4G ou 5G, un réseau WiFi (Wireless Fidelity), etc.) ni à la nature du point d'accès permettant d'accéder à ce réseau (par exemple une station de base, une station eNodeB, etc.).

L'utilisation de techniques de communication full duplex permet en théorie de doubler l'efficacité spectrale pouvant être atteinte sur le réseau de communication par rapport au mode semi duplex (ou Half Duplex (HD) en anglais). En pratique, lorsque de telles techniques FD sont utilisées par exemple dans un réseau de communication cellulaire, le gain obtenu en liaison descendante est plus limité, et des pertes en liaison montante peuvent même être constatées, en raison des interférences créées par les dispositifs du réseau (terminaux et/ou points d'accès) qui utilisent les mêmes ressources radio pour communiquer sur le réseau.

En effet, différents types d'interférences peuvent affecter, dans un réseau de communication sans fil, les transmissions de données effectuées en liaison montante entre un terminal et un point d'accès au réseau auquel le terminal est connecté. Plus particulièrement, on distingue parmi ces interférences dites « co-canal » :

- un premier type d'interférences créées par les signaux transmis en liaison montante par d'autres terminaux utilisant la ou les mêmes ressources de communication, ces autres terminaux pouvant être connectés au même point d'accès que le terminal en question ou à d'autres points d'accès au réseau ;
- un deuxième type d'interférences créées par les signaux transmis en liaison descendante par le même point d'accès auquel le terminal en question est connecté ; ces interférences sont plus communément appelées « auto-interférences » ; et
- un troisième type d'interférences provenant des signaux émis par un autre point d'accès que celui auquel le terminal est connecté et qui utilise en liaison descendante les mêmes ressources radio qu'utilise le terminal en liaison montante.

Il est possible de s'affranchir du deuxième type d'interférences (i.e. des « auto-interférences ») de différentes manières, comme par exemple via une configuration appropriée des antennes de transmission et de réception au niveau du point d'accès (par exemple en assurant une certaine séparation entre les antennes), l'utilisation de filtres et/ou de matériaux appropriés dans les circuits d'antennes, etc.

Compte-tenu des puissances d'émission appliquées en pratique au niveau des terminaux et au niveau des points d'accès (les puissances d'émission appliquées au niveau de points d'accès tels que des stations de base étant bien supérieures à celles appliquées au niveau des terminaux), les interférences du premier type peuvent être négligées par rapport aux interférences du troisième type. L'invention adresse donc plus particulièrement le cas des interférences du troisième type.

Comme mentionné précédemment, la présence de ces interférences limite fortement les bénéfices apportés en liaison montante en termes d'efficacité spectrale par l'utilisation du mode de communication full duplex, voire empêche l'obtention de tels bénéfices. On note que ce type d'interférences n'affecte pas uniquement les réseaux de communication mettant en oeuvre un mode de communication full duplex, mais concerne tout réseau de communication dans lequel l'utilisation simultanée d'une même ressource radio en liaison montante et en liaison descendante (par exemple par des points d'accès différents) est permise.

Pour pallier l'inconvénient précité, une première approche proposée dans l'état de la technique consiste à limiter le nombre de points d'accès du réseau pouvant fonctionner simultanément en mode full duplex. Toutefois, cette première approche, si elle permet effectivement de réduire les interférences créées en liaison montante, se traduit irrévocablement par une limitation du gain pouvant être obtenu grâce au mode full duplex en raison de la limitation du nombre de points d'accès pouvant mettre en oeuvre ce mode de communication.

Une deuxième approche consiste à n'utiliser le mode full duplex que dans des contextes particuliers où l'interférence co-canal subie sur les liaisons montantes est faible, comme par exemple dans des cellules de petites dimensions (ou micro-cellules). Cette deuxième approche réduit malheureusement fortement les opportunités d'utiliser le mode full duplex. En particulier, elle exclut l'utilisation du mode full duplex dans le cas d'une configuration macro-cellulaire ou d'une configuration hétérogène.

Le document EP 3416344 A1 décrit des méthodes et des systèmes d'annulation d'interférences dans des réseaux de télécommunication sans fil. Le document WO 2015/060510 A1 décrit des méthodes et des dispositifs pour la gestion d'interférences entre un équipement utilisateur et une station de base. Enfin, le document US 2018/091282 A1, décrivant un système de communication sans fil et un procédé pour résoudre un problème d'interférence de liaison descendante à liaison montante, est connu.

Il existe donc un besoin d'un mécanisme permettant de réduire l'impact des interférences co-canal de troisième type et permettant, par là-même, de pouvoir bénéficier notamment en liaison montante d'un gain en termes d'efficacité spectrale du fait de l'utilisation d'un mode de communication full duplex ou plus généralement de l'utilisation simultanée de mêmes ressources radio en liaisons montante et descendante.

### Exposé de l'invention

L'invention vise un procédé de communication par un dispositif dit « premier dispositif » d'un réseau de communication sans fil comprenant un premier point d'accès au réseau et au moins un deuxième point d'accès au réseau, le premier point d'accès générant lors d'une communication sur un canal descendant établi avec un premier terminal un signal d'interférence affectant au moins une communication dudit au moins un deuxième point d'accès sur au moins un canal montant établi avec au moins un deuxième terminal, le procédé étant défini par la revendication 1.

Corrélativement, l'invention vise un dispositif dit « premier dispositif » d'un réseau de communication sans fil comprenant un premier point d'accès au réseau et au moins un deuxième point d'accès au réseau, tel que défini à la revendication 11.

Par dispositif du réseau, on entend au sens de l'invention un dispositif de réseau d'accès radio à proprement parler ; ainsi, le premier dispositif du réseau informant le deuxième point d'accès peut être par exemple le premier point d'accès lui-même ou être compris (ex. embarqué) dans ce premier point d'accès, ou en variante, dans un mode de fonctionnement centralisé, il peut s'agir d'une entité centrale de gestion du réseau contrôlant les différents points d'accès au réseau et apte à communiquer avec ces points d'accès, telle qu'une entité de gestion ou de contrôle d'un réseau d'accès centralisé de type C-RAN (pour « Centralized-Radio Access Network » ou « Cloud-RAN » en anglais).

Aucune limitation n'est attachée à la configuration du réseau. Celui-ci peut être constitué d'un ou de plusieurs (sous-)réseaux, géré par un unique opérateur ou par des opérateurs différents, utilisant la même technologie d'accès ou des technologies d'accès différentes.

On note qu'aucune limitation n'est attachée non plus à la façon dont le deuxième point d'accès est informé par le premier dispositif du réseau des données représentatives des paramètres de transmission du premier point d'accès. Ainsi par exemple, le premier dispositif du réseau peut diffuser (« broadcast » en anglais) les données relatives aux paramètres de transmission utilisés par le premier point d'accès sur son canal descendant sur l'ensemble du réseau ou aux points d'accès voisins du premier point d'accès ou à ceux qu'il estime susceptibles de subir des interférences générées par le premier point d'accès.

Au sens de l'invention, les données représentatives de l'ensemble de paramètres de transmission peuvent être de différentes natures. Ainsi, par exemple il peut s'agir des paramètres de transmission directement, transmis en clair, ou des paramètres ayant subi un traitement, tel que par exemple une compression ou un cryptage, ou encore d'une information permettant d'accéder de manière univoque aux paramètres de transmission comme par exemple une adresse mémoire depuis laquelle ces paramètres sont consultables ou un ou plusieurs indices associés via des règles de correspondance prédéfinies aux paramètres de transmission. Bien entendu, d'autres types de données peuvent être envisagés en variante.

Les caractéristiques et avantages du procédé de communication selon l'invention présentés ci-après s'appliquent au premier dispositif du réseau selon l'invention et vice versa.

Comme mentionné précédemment, aucune limitation n'est attachée à la nature du réseau de communication considéré. Ainsi, conformément à l'invention, le premier et le deuxième point d'accès peuvent être des points d'accès à un réseau WiFi (pour « Wireless Fidelity » en anglais), des points d'accès à un réseau LiFi (pour « Light Fidelity » en anglais), des têtes radio distantes de type RRH (pour « Remote Radio Header » en anglais) équipant un noeud B pour les réseaux cellulaires de 3ème génération (3G) ou un noeud B évolué (ou eNodeB) pour les réseaux cellulaires de 3ème génération (3G), 4ème génération (4G) ou 5ème génération (5G), etc.

En outre, conformément à l'invention, le premier et le deuxième point d'accès peuvent être de même nature ou de natures différentes, telle qu'une RRH de 3ème génération (3G) et un eNodeB (4G).

L'invention propose ainsi que les paramètres de transmission utilisés en liaison descendante par un premier point d'accès au réseau de communication susceptible de créer des interférences sur des signaux reçus par un deuxième point d'accès, soient communiqués à ce dernier. Grâce à la connaissance de ces paramètres, le deuxième point d'accès peut tenter d'éliminer ou tout du moins de réduire les interférences causées par le premier point d'accès, en utilisant par exemple une technique d'annulation d'interférences telle qu'une technique d'annulation successive d'interférences connue en soi.

En effet, les paramètres de transmission communiqués au deuxième point d'accès définissent le schéma de transmission des données adopté sur un canal de transmission descendant donné par le premier point d'accès pour communiquer avec un terminal auquel il est connecté. Ces paramètres peuvent comprendre par exemple un schéma de modulation, un schéma de codage (par exemple un codage de canal, un codage utilisé pour multiplexer les données, etc.), et/ou un niveau de puissance. Ces exemples ne sont donnés qu'à titre illustratif et d'autres paramètres de transmission peuvent être envisagés dans le cadre de l'invention.

Par ailleurs, lorsque le deuxième terminal émet à destination du deuxième point d'accès sur le canal montant un signal dit « utile » véhiculant des données, le signal dit « total » qui est alors reçu par le deuxième point d'accès comprend ledit signal utile ainsi qu'un ou plusieurs signaux d'interférence comprenant diverses contributions provenant des communications en liaison descendante des dispositifs du réseau (dont éventuellement le deuxième point d'accès lui-même). Ces interférences incluent notamment les interférences co-canal mentionnées précédemment liées à l'utilisation des mêmes ressources radio en liaison montante et en liaison descendante par différents points d'accès du réseau ; l'invention s'applique en effet de façon privilégiée lorsque le premier point d'accès utilise lors de ladite communication sur le canal descendant, une ressource utilisée par ledit au moins un deuxième point d'accès lors de ladite au moins une communication sur ledit au moins un canal montant. Toutefois, l'invention s'applique également à des interférences générées par l'utilisation de ressources radio adjacentes ou voisines, mais également des ressources plus éloignées du fait par exemple de la présence d'imperfections dues à la saturation des amplificateurs de puissance ou à des erreurs de filtrage des signaux. Ces interférences, comme mentionné précédemment, sont générées par le premier point d'accès en appliquant les paramètres de transmission envoyés au deuxième point d'accès.

Par souci de simplification de la terminologie utilisée dans la suite de la description et par abus de langage, le premier point d'accès est qualifié de point d'accès « interféreur » pour le deuxième point d'accès, et le deuxième point est qualifié de point d'accès « interféré » par le premier point d'accès.

Grâce à la connaissance des paramètres de transmission appliqués par le premier point d'accès lorsqu'il génère le signal d'interférence, le deuxième point d'accès peut donc aisément détecter, dans le signal total qu'il a reçu, la contribution liée à l'interférence créée par le premier point d'accès, et tenter d'éliminer cette interférence au moyen d'une technique d'annulation d'interférence appropriée exploitant ces paramètres de transmission, telle que par exemple une technique d'annulation successive d'interférences connue en soi.

En procédant de la sorte pour les différents points d'accès du réseau susceptibles le cas échéant d'interférer le signal utile provenant du deuxième terminal au niveau du deuxième point d'accès (typiquement dans un contexte multicellulaire), ou au moins pour une sélection de points d'accès (par exemple les points d'accès interféreurs les plus puissants), il est possible d'améliorer l'efficacité spectrale globale du réseau grâce à l'utilisation de ressources communes en liaison montante et en liaison descendante.

Dans un réseau mettant en oeuvre le mode de communication full duplex au niveau de ses points d'accès, l'invention permet en outre de se rapprocher du gain théorique offert par l'utilisation de ce mode de communication, et notamment d'améliorer l'efficacité spectrale du réseau en liaison montante.

On note que bien que l'invention est décrite en référence au mode de communication full duplex et s'applique de façon très avantageuse à ce mode de communication, elle peut également s'appliquer, comme évoqué plus en détail ultérieurement, lorsque le réseau de communication met en oeuvre un mode de communication Half Duplex.

Par ailleurs, l'invention s'applique à tout type de topologies de réseau cellulaire, c'est-à-dire homogènes par rapport à la taille des cellules (par exemple, à une topologie micro-cellulaire ou à une topologie macro-cellulaire) ou hétérogènes (i.e. comprenant des cellules de différentes tailles comme par exemple des micro-cellules et des macro-cellules). L'invention permet d'utiliser le mode full duplex et de bénéficier d'un gain en matière d'efficacité spectrale (en particulier sur la liaison montante) via l'utilisation de ce mode, non seulement dans une configuration micro-cellulaire comme dans l'état de la technique mais également dans une configuration macro-cellulaire ou hétérogène. Elle permet dans ces différents contextes de gérer pour chaque paire de points d'accès l'interférence créée par l'utilisation commune de certaines ressources radio.

On note que conformément à l'invention, les premier et deuxième terminaux peuvent être un téléphone mobile de type smartphone, un ordinateur, une tablette, ou tout autre dispositif communicant configuré pour pouvoir être connecté au réseau de communication sans fil via un point d'accès à ce réseau.

Dans un mode de réalisation, le procédé de communication conforme à l'invention comporte en outre une étape de détermination de l'ensemble de paramètres de transmission en fonction d'une estimation d'une qualité d'au moins un canal de propagation sans fil (ou canal de propagation radio) entre le premier et ledit au moins un deuxième point d'accès, cet ensemble de paramètres de transmission étant déterminé de sorte à permettre audit au moins un deuxième point d'accès de détecter dans un signal reçu par celui-ci, comprenant un signal transmis sur le canal montant par le deuxième terminal, ledit signal d'interférence créé par le premier point d'accès lors de la communication avec le premier terminal sur le canal descendant.

Les paramètres de transmission peuvent être notamment déterminés à partir d'un ensemble prédéterminé (aussi appelé « codebook » en anglais) de paramètres de transmission pouvant être appliqués sur le réseau de communication. Ces paramètres de transmission sont par exemple définis dans les documents de spécification du ou des standards au(x)quel(s) est conforme le réseau de communication. Un tel codebook se présente par exemple sous la forme d'une liste de couples comprenant chacun un schéma de codage et une modulation, lorsque les paramètres de transmission considérés sont des schémas de codage et de modulation. Bien entendu cet exemple n'est donné qu'à titre illustratif.

L'invention permet ainsi de choisir, compte tenu de la qualité du canal de propagation entre les premier et deuxième points d'accès, les paramètres de transmission utilisés en liaison descendante par le premier point d'accès de sorte à favoriser les performances obtenues sur la liaison montante du deuxième point d'accès. En effet, le canal de propagation entre les premier et deuxième points d'accès modélise l'interférence générée par le premier point d'accès via la communication en liaison descendante sur la communication du deuxième point d'accès en liaison montante. On le désigne également par « canal d'interférences » entre le premier et le deuxième point d'accès.

En variante, on peut envisager que les paramètres de transmission du premier point d'accès soient déterminés en tenant compte d'autres facteurs, comme par exemple de la qualité de service de la liaison descendante du premier point d'accès. On note toutefois que dès lors que le deuxième point d'accès arrive à éliminer l'interférence provenant d'un autre point d'accès, un gain en liaison montante est obtenu pour le deuxième point d'accès.

En particulier à cet effet, l'étape d'estimation de la qualité dudit au moins un canal de propagation entre les deux points d'accès peut comporter une estimation d'une capacité dudit au moins un canal de propagation.

De façon connue en soi, la capacité d'un canal désigne la limite supérieure du débit de données (exprimé en bits par seconde par exemple) qui peut être transmis de manière fiable sur ce canal, c'est-à-dire avec une probabilité d'erreur qui tend vers zéro.

En variante, la qualité du canal peut être estimée à partir d'autres métriques, comme par exemple d'un rapport signal-sur-bruit plus interférences ou SINR (pour « Signal-to- Interference-plus-Noise Ratio » en anglais) obtenu sur le canal de propagation entre les deux points d'accès, d'un indicateur de qualité du canal ou CQI (pour « Channel Quality Indicator » en anglais), d'un niveau de puissance du signal utile reçue, d'un niveau d'interférences sur la ressource de communication considérée, etc. L'estimation de la qualité du canal peut également comporter un test de sa disponibilité, une estimation de son temps de réponse, une estimation de son gain, etc.

Dans un mode de réalisation de l'invention, si une capacité du canal descendant du premier point d'accès est inférieure ou égale à la capacité dudit au moins un canal de propagation entre le premier et ledit au moins un deuxième point d'accès, l'ensemble des paramètres de transmission est déterminé de sorte à maximiser une valeur d'un débit transmis sur le canal descendant, dans la limite de la capacité du canal descendant.

Dans ce mode de réalisation, le facteur limitant pour le choix de paramètres de transmission appliqués par le premier point d'accès est la capacité de son canal descendant. Conformément aux principes de la théorie de l'information et plus particulièrement au théorème de Shannon, il n'est pas possible de transmettre de manière fiable des données sur un canal de transmission avec un débit supérieur à sa capacité. Par conséquent, il n'est pas possible de choisir des paramètres de transmission pour être appliqués en liaison descendante par le premier point d'accès correspondant à un débit supérieur à la capacité du canal descendant. En revanche, on note que la capacité du canal descendant étant inférieure ou égale à la capacité du canal entre les deux points d'accès, quels que soient les paramètres de transmission déterminés correspondant à un débit inférieur ou égal à la capacité de ce canal descendant, les données transmises par le premier point d'accès en appliquant ces paramètres de transmission pourront être convenablement détectées par le deuxième point d'accès (et le cas échéant décodées puis l'interférence en résultant éliminée).

En choisissant des paramètres de transmission maximisant le débit sur le canal descendant (dans la limite de la capacité du canal descendant), on maximise l'efficacité spectrale pouvant être obtenue en liaison descendante.

Dans un mode de réalisation de l'invention, si la capacité du canal descendant du premier point d'accès est supérieure à la capacité dudit au moins un canal de propagation entre le premier et ledit au moins un deuxième point d'accès, l'ensemble des paramètres de transmission est déterminé de sorte à maximiser la valeur de débit transmis sur le canal descendant, dans la limite de la capacité dudit au moins un canal de propagation entre le premier et ledit au moins un deuxième point d'accès.

Dans ce mode de réalisation, le premier point d'accès utilise des paramètres de transmission sur son canal descendant correspondant à un débit limité par rapport au débit qu'il pourrait envisager de transmettre compte tenu de la capacité de ce canal descendant, ce débit étant borné par la capacité du canal de propagation entre les deux points d'accès de sorte à rendre possible la détection par le deuxième point d'accès de l'interférence due à la transmission par le premier point d'accès sur le canal descendant. Pour « limiter » la perte en termes de débit sur la liaison descendante du premier point d'accès, on choisit, dans ce mode de réalisation, les paramètres de transmission permettant de s'approcher le plus possible de la capacité du canal de propagation entre les deux points d'accès.

Il convient de noter que dans un contexte multicellulaire, dans lequel le premier point d'accès est susceptible de créer des interférences sur les signaux émis sur des liaisons montantes vers une pluralité de points d'accès, on peut tenir compte, lors de la détermination des paramètres de transmission du premier point d'accès, des capacités des canaux de propagation entre le premier point d'accès et chacun de ladite pluralité de points d'accès. Par exemple, on peut considérer un pire cas dans lequel le débit correspondant aux paramètres de transmission choisis est limité par la capacité la plus faible (capacité de la liaison descendante du premier point d'accès ou plus petite des capacités des canaux de transmission séparant le premier point d'accès et ladite pluralité de points d'accès).

Dans un mode de réalisation, le procédé de communication conforme à l'invention comporte en outre :

- une étape d'obtention d'au moins une information identifiant au moins un point d'accès dit interféreur du réseau générant lors d'une communication sur un canal descendant un signal d'interférence affectant une communication d'un autre point d'accès, dit interféré, sur un canal montant ;
- une étape de détermination à partir de ladite au moins une information obtenue, d'un ensemble de points d'accès interférés pour lesquels ledit premier point d'accès est identifié comme un point d'accès interféreur, ledit au moins un deuxième point d'accès appartenant audit ensemble déterminé.

Par exemple, dans un mode de réalisation, l'étape d'obtention d'une information identifiant un point d'accès interféreur comporte une réception de cette information en provenance d'un point d'accès interféré par ce point d'accès interféreur.

Ainsi, dans ce mode de réalisation, le premier dispositif du réseau identifie les points d'accès du réseau (désignés par interférés) susceptibles de recevoir des signaux en liaison montante interférés par les signaux envoyés en liaison descendante par le premier point d'accès, à partir d'informations transmises par ces points d'accès. Ce mode de réalisation permet de dresser une cartographie des interférences générées dans le réseau, cette cartographie pouvant être exploitée pour améliorer l'efficacité spectrale du réseau.

Au sens de l'invention, une information identifiant un point d'accès peut être n'importe quel type d'information permettant d'identifier de manière univoque un point d'accès, telle que par exemple un nom ou une référence attribuée à celui-ci par un opérateur du réseau, un identifiant du point d'accès, en clair, crypté ou compressé, etc.

On note que le premier dispositif du réseau peut cibler l'envoi des données représentatives des paramètres de transmission du premier point d'accès vers une partie seulement des points d'accès interférés, par exemple ceux pour lesquels le niveau d'interférence créée par le premier point d'accès est supérieur à un certain seuil, ou se trouvant dans le voisinage du premier point d'accès. Alternativement, le premier dispositif peut envoyer les données représentatives des paramètres de transmission vers les points d'accès qui sont en mesure d'éliminer l'interférence générée par le premier point d'accès, etc.

L'identification des points d'accès interférés par le premier point d'accès peut être réalisée de différentes manières. Il peut s'agir par exemple d'une configuration statique des points d'accès au moyen d'une liste d'identifiants préétablie, qui peut être fournie notamment par l'opérateur du réseau.

En variante, cette liste peut être déterminée dynamiquement par chaque point d'accès à partir de signaux pilotes par exemple diffusés par les autres points d'accès du réseau.

Bien entendu, d'autres solutions peuvent être mises en oeuvre dans le cadre de l'invention.

Selon un autre aspect, l'invention vise également un procédé de sélection, par un deuxième dispositif d'un réseau de communication sans fil, d'un ensemble de paramètres de transmission, dit deuxième ensemble, destiné à être utilisé lors d'une communication par un terminal, dit deuxième terminal, sur un canal montant établi avec un point d'accès au réseau dit deuxième point d'accès, cette communication étant affectée par au moins un signal d'interférence généré par au moins un premier point d'accès au réseau de communication sans fil lors d'au moins une communication sur au moins un canal descendant établi avec au moins un premier terminal , ce procédé de sélection étant défini par la revendication 6.

Corrélativement, l'invention vise un deuxième dispositif d'un réseau de communication sans fil, ce deuxième dispositif étant défini par la revendication 12.

Les caractéristiques et avantages du procédé de sélection selon l'invention présentés ci-après s'appliquent de la même façon au deuxième dispositif selon l'invention et vice versa.

En outre, les caractéristiques et avantages du procédé de communication et du premier dispositif conformes à l'invention déjà présentés s'appliquent de la même façon au procédé de sélection et au deuxième dispositif selon l'invention et vice versa.

En particulier, dans un mode particulier de réalisation, ledit au moins un premier point d'accès utilise lors de ladite au moins une communication sur ledit au moins un canal descendant, une ressource utilisée par ledit deuxième point d'accès lors de la communication sur le canal montant.

Conformément à l'invention, le deuxième dispositif sélectionne le deuxième ensemble de paramètres de transmission en fonction des données représentatives du premier ensemble de paramètres de transmission utilisé par le premier point d'accès, pour que le deuxième point d'accès soit en mesure d'éliminer les interférences entre les signaux reçus du premier point d'accès (et émis par celui-ci sur un canal descendant) et les signaux reçus du deuxième terminal via le canal montant. Pour permettre cette élimination, et plus particulièrement la détection de l'interférence créée par le premier point d'accès, les paramètres de transmission utilisés par le deuxième point d'accès doivent différer de ceux utilisés par le premier point d'accès. Des considérations similaires sont prises en compte lorsque le deuxième point d'accès est confronté à des interférences provenant de plusieurs points d'accès.

A titre d'exemple, lorsque les points d'accès utilisent une technique d'accès multiple non orthogonal désignée par NOMA (pour « Non-Orthogonal Multiple Access » en anglais), mettant en oeuvre un codage par superposition et un multiplexage dans le domaine de la puissance, le deuxième dispositif sélectionne typiquement une puissance différente de celle appliquée par le premier point d'accès, cette sélection conduisant à une superposition du signal émis sur le canal montant par le deuxième terminal sur le signal émis sur le canal descendant par le premier point d'accès. Ainsi, le deuxième point d'accès peut distinguer les données reçues du deuxième terminal des données reçues du premier point d'accès.

Conformément à l'invention, le premier et le deuxième ensemble de paramètres de transmission sont différents : autrement dit, il existe au moins un paramètre de l'un de ces ensembles (du premier ensemble par exemple) qui est différent de chacun des paramètres de l'autre ensemble (du deuxième ensemble dans cet exemple).

La sélection de tout ou partie des deuxièmes paramètres de transmission peut se faire, dans un mode particulier de réalisation, à partir d'une liste prédéfinie de paramètres de transmission (par exemple une liste comprenant une pluralité de couples identifiant chacun un schéma de codage et une modulation). Cette liste peut être comprise dans une mémoire du deuxième dispositif conforme à l'invention ou d'une unité de stockage accessible par le deuxième dispositif, telle qu'une base de données.

Dans un mode particulier de réalisation, le deuxième ensemble de paramètres de transmission est déterminé de sorte à maximiser un débit transmis sur le canal montant dans la limite d'une capacité de ce canal montant.

De cette sorte, on maximise l'efficacité spectrale pouvant être obtenue en liaison montante.

Comme indiqué précédemment, le deuxième dispositif du réseau est un dispositif de réseau d'accès radio.

Dans un mode de réalisation, le deuxième dispositif du réseau est le deuxième point d'accès ou est compris (ex. embarqué) dans le deuxième point d'accès.

Dans ce mode de réalisation, l'étape d'obtention d'au moins une donnée représentative du premier ensemble de paramètres de transmission peut comporter une réception de cette donnée en provenance du premier dispositif conforme à l'invention.

Dans un autre mode de réalisation centralisé, le deuxième dispositif est compris dans une entité de gestion du réseau apte à communiquer avec le premier point d'accès et le deuxième point d'accès, par exemple une entité centrale de gestion du réseau. Dans ce mode de réalisation centralisé, les premier et deuxième dispositifs sont hébergées préférentiellement tous les deux dans l'entité de gestion du réseau. On peut avoir notamment au sein de cette entité un seul et même dispositif mettant en oeuvre les fonctions des premier et deuxième dispositifs selon l'invention.

Dans un mode de réalisation, le procédé de sélection comporte en outre une étape d'envoi au deuxième terminal d'une commande d'utilisation du deuxième ensemble de paramètres de transmission.

Dans un mode de réalisation, l'étape d'envoi est mise en oeuvre si le deuxième ensemble de paramètres de transmission comprend au moins un paramètre de transmission différent d'un paramètre de transmission déjà utilisé par le deuxième terminal sur le canal montant.

Ce mode permet d'éviter un envoi inutile d'informations au deuxième terminal lorsque ses paramètres de transmission restent inchangés. Ceci permet avantageusement de limiter la signalisation échangée sur le réseau.

En particulier, l'envoi de la commande au deuxième terminal peut être effectué notamment par ou via le deuxième point d'accès qui sert alors de relai entre le deuxième dispositif et le deuxième terminal. Dans un mode particulier de réalisation, le procédé de sélection comprend en outre :

- une étape de détermination d'au moins un point d'accès du réseau dit interféreur pour le deuxième point d'accès, générant sur un canal descendant établi avec un terminal un signal d'interférence affectant une communication du deuxième point d'accès sur le canal montant ; et

- une étape de fourniture à un premier dispositif du réseau d'au moins une information identifiant le (ou les) point(s) d'accès interféreur(s) déterminé(s), cette information étant destinée à être utilisée par le premier dispositif du réseau pour déterminer un ensemble de paramètres de transmission du (ou des) point(s) d'accès interféreur(s) déterminé(s).

Comme mentionné précédemment, ce mode de réalisation permet au premier dispositif du réseau d'établir une cartographie des interférences générées dans le réseau.

Dans un mode de réalisation, une entité de gestion du réseau met en oeuvre le procédé de communication conforme à l'invention, ainsi que le procédé de sélection conforme à l'invention : cette entité communique le premier ensemble de paramètre au deuxième point d'accès, et sélectionne le deuxième ensemble de paramètres destiné à être utilisé par le deuxième terminal connecté au deuxième point d'accès. Cette entité peut être centralisée. Elle peut en outre déterminer le premier ensemble utilisé par le premier point d'accès.

Comme mentionné précédemment, l'invention s'applique de façon avantageuse lorsque le réseau de communication met en oeuvre un mode de communication Full-Duplex (FD) au niveau de tout ou partie de ses points d'accès. Nous rappelons qu'en mode FD, un point d'accès émet et reçoit des données sur une même ressource radio de communication (par exemple il utilise la même ressource temps-fréquence, autrement dit, il émet et reçoit des données dans le même intervalle de temps sur la même fréquence). Préférentiellement, l'invention s'applique lorsque le deuxième point d'accès fonctionne en mode FD et est configuré pour toujours pouvoir recevoir des données. Le premier point d'accès peut fonctionner en mode FD ou en mode Half Duplex (HD).

Mais l'invention peut également s'appliquer dans d'autres contextes.

Ainsi, l'invention a une application avantageuse lorsque le deuxième point d'accès fonctionne en mode HD et lorsque le canal montant du deuxième point d'accès coïncide dans le temps ou en fréquence avec une émission de données par le premier point d'accès sur au moins un de ses canaux descendants.

L'invention peut aussi s'appliquer lorsque le premier et le deuxième point d'accès fonctionnent tous les deux en mode HD, notamment lorsque ceux-ci ne sont pas synchronisés. On note toutefois que dans un tel contexte, les points d'accès fonctionnant en mode HD qui sont susceptibles d'interférer entre eux, peuvent également se synchroniser entre eux.

Lorsque le premier et le deuxième point d'accès fonctionnent tous les deux en mode FD, chacun de ces points d'accès peut mettre en oeuvre les deux procédés de l'invention, pour un échange mutuel des paramètres de transmission entre les deux points d'accès et une réduction des interférences au niveau des canaux montants des deux points d'accès. En variante, comme évoqué précédemment, cet échange peut se faire via une entité de gestion centralisée du réseau configurée pour communiquer avec les deux points d'accès.

L'invention s'applique également dans d'autres contextes de génération d'interférences (utilisation de ressources adjacentes, voisines, ou éloignées mais en utilisant des puissances d'émission telles que des interférences sont générées).

L'invention vise également un système dans un réseau de communications sans fil, comportant au moins un premier dispositif conforme à l'invention, au moins un deuxième dispositif conforme à l'invention, au moins un premier point d'accès au réseau et au moins un deuxième point d'accès au réseau.

Dans un mode de réalisation, le premier dispositif conforme à l'invention est compris dans le premier point d'accès et/ou le deuxième dispositif conforme à l'invention est compris dans le deuxième point d'accès.

Dans un mode de réalisation, le premier dispositif et le deuxième dispositif conformes à l'invention sont compris dans une entité de gestion du réseau, par exemple centralisée, apte à communiquer avec le premier point d'accès et le deuxième point d'accès.

Il serait possible de fournir un premier programme d'ordinateur sur un support d'enregistrement, ce programme étant susceptible d'être mis en oeuvre dans un ordinateur ou dans un premier dispositif de réseau conforme à l'invention. Ce programme comporte des instructions adaptées à la mise en oeuvre d'un procédé de communication tel que décrit ci-dessus.

Il serait également possible de fournir un deuxième programme d'ordinateur sur un support d'enregistrement, ce programme étant susceptible d'être mis en oeuvre dans un ordinateur ou un deuxième dispositif de réseau conforme à l'invention. Ce programme comporte des instructions adaptées à la mise en oeuvre d'un procédé de sélection tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Il serait aussi possible de fournir un support d'information ou un support d'enregistrement lisibles par un ordinateur, et comportant des instructions du premier ou du deuxième programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution du procédé de communication, conforme à l'invention, ou du procédé de sélection, conforme à l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 illustre une architecture d'un réseau de communication sans fil dans lequel les procédés de l'invention sont mis en oeuvre selon un mode de réalisation de l'invention ;

[Fig. 2] la figure 2 est un organigramme représentant des étapes d'un procédé de communication et

des étapes d'un procédé de sélection selon l'invention, dans un premier mode de réalisation de l'invention ;

[Fig. 3] la figure 3 est un organigramme représentant des sous-étapes d'une étape d'obtention de paramètres de transmission mise en oeuvre dans le procédé de communication illustré à la figure 2;

[Fig. 4] la figure 4 est un organigramme représentant des étapes d'un procédé de communication et des étapes d'un procédé de sélection selon l'invention, dans un deuxième mode de réalisation de l'invention ;

[Fig. 5] la figure 5 est un organigramme représentant des étapes d'un procédé de communication et des étapes d'un procédé de sélection selon l'invention, dans un troisième mode de réalisation de l'invention ;

[Fig. 6] la figure 6 présente des architectures fonctionnelles d'un système, d'un premier et d'un deuxième dispositif de réseau conformes à l'invention; et

[Fig. 7] la figure 7 présente des architectures matérielles d'un premier et d'un deuxième dispositif de réseau conformes à l'invention.

Description des modes de réalisation

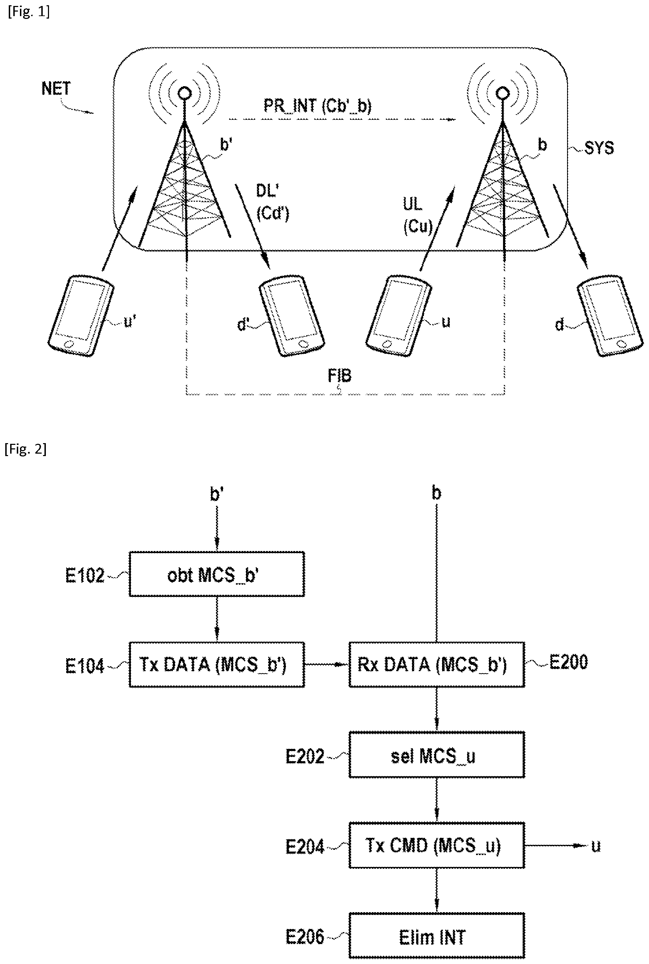

La **figure 1** illustre une architecture d'un réseau NET de communication sans fil dans lequel les procédés de l'invention sont mis en oeuvre selon un mode particulier de réalisation de l'invention.

Dans ce mode de réalisation, le réseau NET est un réseau cellulaire de $4^{ème}$ génération. Ce réseau NET comporte un système SYS comprenant deux points d'accès b' et b.

Dans ce mode de réalisation, les points d'accès b' et b sont des stations de base 4G de type eNodeB.

Bien entendu, ces hypothèses ne sont pas limitatives en soi, et comme évoqué précédemment, l'invention s'applique à d'autres réseaux de communication (par exemple 3G, 5G, WiFi, LiFi, etc.), à d'autres types de points d'accès (points d'accès WiFi, LiFi, stations de base, etc.), et à d'autres configurations de réseau (par exemple, comprenant un nombre différent de points d'accès, ou plusieurs sous-réseaux gérés par le même opérateur ou des opérateurs différents), etc.

En particulier, le réseau NET peut être un réseau de type WiFi. Dans un tel cas, les points d'accès b' et b sont conformes à la norme WiFi. Ces points d'accès b' et b peuvent être notamment des équipements de terminaison de réseau, connus en France sous le nom de « box » tel qu'un équipement LiveBox d'Orange (marques déposées).

Alternativement, le réseau NET peut être un réseau de type LiFi. Dans ce cas, les points d'accès b' et b sont des points d'accès à ce réseau LiFi et peuvent être des émetteurs/récepteurs d'ondes lumineuses.

Dans un autre contexte, les points d'accès b et b' peuvent implémenter des technologies d'accès différentes.

Dans le mode de réalisation décrit ici, les deux points d'accès b et b' fonctionnent en mode FD. On suppose en outre que des terminaux u' et d' sont connectés au premier point d'accès b' et que des terminaux u et d sont connectés au deuxième point d'accès b. Aucune limitation n'est attachée à la nature de ces terminaux (téléphones intelligents, tablettes numériques, ordinateurs, etc.)

Dans la suite de la description à titre illustratif, on s'intéresse plus particulièrement aux canaux montants UL' et UL connectant les terminaux u' et u aux points d'accès b' et b respectivement et permettant aux terminaux u' et u d'envoyer des signaux véhiculant des données aux points d'accès b' et b respectivement, ainsi qu'aux canaux descendants DL' et DL connectant les terminaux d' et d aux points d'accès b' et b respectivement et permettant aux points d'accès b' et b d'envoyer des signaux véhiculant des données aux terminaux d' et d respectivement.

Dans le mode de réalisation décrit ici, on suppose qu'il existe un lien direct de communication FIB entre les deux points d'accès b' et b, réalisé par exemple au moyen d'une fibre optique. Ce lien de communication direct est utilisé par les points d'accès pour échanger divers types d'informations (par exemple des informations de synchronisation, des paramètres de transmission, etc.), comme détaillé davantage ultérieurement.

En variante, les deux points d'accès b et b' peuvent communiquer entre eux via un lien de communication filaire ou sans fil s'appuyant soit sur la même technologie que le réseau NET soit sur une autre technologie.

Dans un autre mode de réalisation, le réseau NET peut être un réseau centralisé, par exemple de type C-RAN, et comprendre une entité centrale D de gestion ou de contrôle du réseau NET. Dans ce mode de réalisation, le lien FIB peut alors être un lien de communication permettant une communication indirecte entre les deux points d'accès b' et b via cette entité centrale D de gestion ou de contrôle du réseau NET.

Dans le mode de réalisation décrit ici, les terminaux u', d', u et d fonctionnent en mode HD. Bien entendu, ces hypothèses relatives au fonctionnement des points d'accès b' et b et des terminaux u', d', u et d en mode FD ou en mode HD ne sont pas limitatives. L'invention s'applique également dans des cas où au moins l'un des terminaux fonctionne en mode FD ou dans des cas où au moins l'un des points d'accès fonctionne en mode HD. A titre d'exemple, le deuxième point d'accès b peut fonctionner en mode FD et le premier point d'accès b' en mode HD.

En outre, dans le mode de réalisation décrit ici, les points d'accès b' et b utilisent un multiplexage en puissance, basé sur une technique NOMA connue de l'homme du métier. Une telle technique peut être utilisée en combinaison par exemple avec une forme d'onde de type CDMA (Code Division Multiple Access) ou OFDM (Orthogonal Frequency-Division Multiplexing). Bien entendu cette hypothèse n'est pas limitative en soi, et l'invention s'applique également dans d'autres contextes (y compris sans utiliser de technique NOMA) dans lesquels une technique d'annulation d'interférence, par exemple de type annulation successive d'interférence ou SIC (pour « Successive Interference Cancellation » en anglais) peut être utilisée, comme notamment une technique de multiplexage par code, etc.

On suppose que le premier et le deuxième point d'accès peuvent partager une même ressource radio de communication sans fil (ou RB), telle qu'une même fréquence pendant un même intervalle de temps. Cette ressource est par exemple ici utilisée par le premier point d'accès b' sur son canal descendant pour communiquer avec le terminal d'. Cette même ressource est utilisée aussi par le terminal u sur le canal montant pour communiquer avec le deuxième point d'accès b. Cette utilisation commune de la même RB a pour conséquence que les communications descendantes utilisant cette ressource RB entre le premier point d'accès b' et le terminal d' génèrent des signaux d'interférences sur les communications montantes utilisant la ressource RB entre le deuxième point d'accès b et le terminal u. L'invention propose une solution efficace pour permettre de supprimer ces interférences.

On note que l'invention s'applique également dans d'autres contextes, dès lors que le premier point d'accès b' génère lors de ses communications en liaison descendante, des signaux d'interférences susceptibles d'affecter des communications en liaison montante d'autres points d'accès du réseau tels que le deuxième point d'accès b. Ce peut être le cas notamment lorsque le premier point d'accès b' utilise simultanément sur un canal descendant une ressource adjacente ou voisine (par exemple une fréquence adjacente ou voisine) d'une ressource utilisée par le deuxième point d'accès b sur un canal montant. Ce cas de figure peut également être rencontré lorsque le premier point d'accès b' utilise une fréquence plus éloignée que le deuxième point d'accès b mais qu'en raison d'imperfections affectant en pratique les systèmes de communication actuels (par exemple, filtres défectueux, produits d'intermodulation dus à la saturation dans les amplificateurs de puissance, etc.), le premier point d'accès génère des interférences susceptibles d'affecter les signaux reçus par le deuxième point d'accès b.

La **figure 2** est un organigramme représentant des étapes d'un procédé de communication au deuxième point d'accès b de données représentatives d'un ensemble de paramètres de transmission utilisé par le premier point d'accès b', conforme à l'invention, et des étapes d'un procédé de sélection d'un deuxième ensemble de paramètres de transmission conforme à l'invention dans un mode particulier de réalisation.

Dans le mode de réalisation représenté sur la figure 2, le premier dispositif mettant en oeuvre le procédé de communication selon l'invention est compris dans le premier point d'accès b'. De ce fait, le premier point d'accès b' met en oeuvre le procédé de communication conforme à l'invention. Par ailleurs, le deuxième dispositif mettant en oeuvre le procédé de sélection selon l'invention est compris dans le deuxième point d'accès b. Le deuxième point d'accès b met donc en oeuvre le procédé de sélection conforme à l'invention.

Les étapes E102 et E104 décrites ci-après sont des étapes du procédé de communication selon l'invention.

Les étapes E200, E202, E204 et E206 décrites ci-après sont des étapes du procédé de sélection selon l'invention.

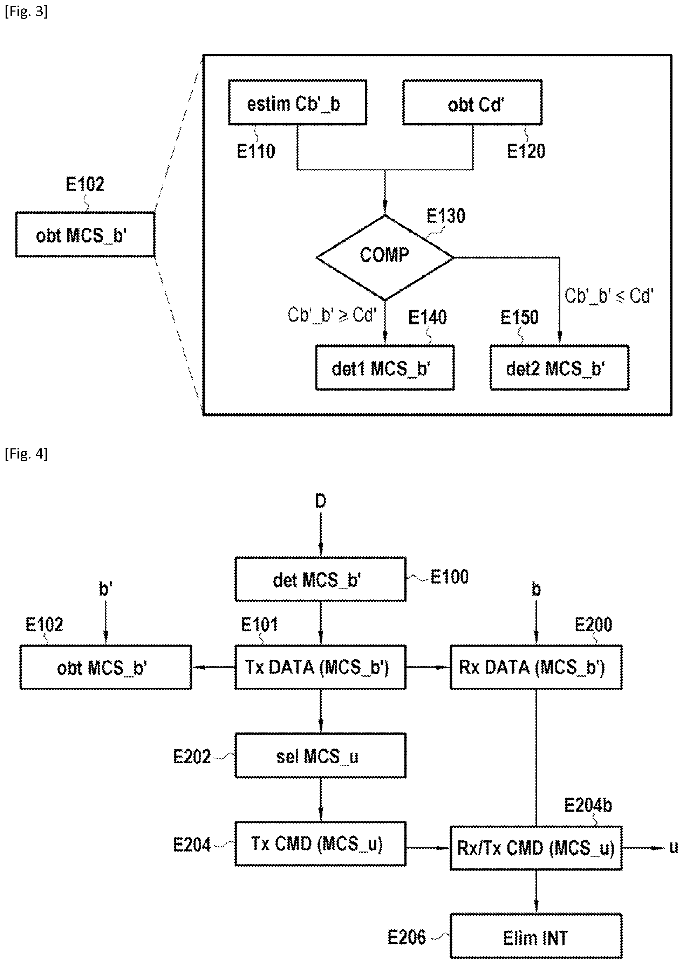

Au cours d'une étape E102, le premier point d'accès b' obtient l'ensemble des paramètres de transmission MCS_b' (premier ensemble de paramètres de transmission au sens de l'invention) qu'il utilise sur son canal descendant pour communiquer avec le terminal d'. Dans le mode de réalisation décrit ici, ces paramètres de transmission définissent un schéma de modulation et de codage. Ils comprennent plus particulièrement un identifiant définissant de manière univoque une modulation et un schéma de codage utilisés par le premier point d'accès b', ainsi qu'un niveau de puissance d'émission appliqué par le premier point d'accès b' lorsqu'il envoie des signaux sur son canal descendant à destination du terminal d' conformément à la technique NOMA. Un exemple de mise en oeuvre de l'étape E102 d'obtention de l'ensemble de paramètres de transmission MCS_b' est décrit ultérieurement en référence à la figure 3.

Comme évoqué précédemment, cet exemple d'ensemble MCS_b' de paramètres de transmission n'est donné qu'à titre illustratif. L'invention s'applique à d'autres paramètres de transmission permettant de définir le schéma de transmission appliqué par le point d'accès b' lorsqu'il communique sur son canal descendant avec le terminal d' pour générer les signaux véhiculant les données envoyées au terminal d'. Ainsi par exemple, les paramètres de transmission peuvent définir un niveau de puissance, un schéma de codage utilisé pour l'accès multiple, etc.

Au cours d'une étape E104, le premier point d'accès b' envoie au deuxième point d'accès b des données DATA représentatives de l'ensemble des paramètres MCS_b'. Dans le mode décrit ici, les données DATA comportent l'ensemble des paramètres MCS_b' tels qu'ils ont été obtenus lors de l'étape E102'. En variante, les données DATA peuvent prendre une forme différente dès lors qu'elles représentent de manière univoque les paramètres de transmission MCS_b'. Ainsi, à titre d'exemple, les données DATA peuvent résulter d'une compression, d'un cryptage et/ou d'un codage de l'ensemble des paramètres MCS_b'. L'envoi de ces données DATA se fait ici via le lien FIB entre les deux points d'accès b' et b.

Au cours d'une étape E200, le deuxième point d'accès b reçoit ces données DATA représentatives de l'ensemble MCS_b'.

Au cours d'une étape E202, le point d'accès b sélectionne en fonction des données reçues (E200) DATA et à partir ici d'une liste L de paramètres de transmission préétablie (ex. une liste de couples comprenant chacun un schéma de codage et une modulation), un deuxième ensemble MCS_u de paramètres de transmission différent du premier ensemble MCS_b' de paramètres de transmission. Autrement dit, le deuxième ensemble MCS_u comprend au moins un paramètre de transmission différent des paramètres du premier ensemble MCS_b'. Les paramètres sélectionnés du deuxième ensemble MCS_u sont destinés à être appliqués par le terminal u sur le canal montant UL vers le deuxième point d'accès b. Dans ce mode de réalisation, les paramètres MCS_u comportent aussi un schéma de modulation et de codage et un niveau de puissance. Comme évoqué précédemment, cette hypothèse n'est toutefois pas limitative.

En outre, dans le mode de réalisation décrit ici, le deuxième ensemble MCS_u de paramètres de transmission est sélectionné par le point d'accès b de sorte à maximiser le débit de transmission obtenu sur le canal montant UL entre le terminal u et le point d'accès b. A cet effet, le point d'accès b choisit dans la liste L un schéma de codage, une modulation et un niveau de puissance permettant d'atteindre un débit se rapprochant le plus possible de la capacité du canal montant UL entre le terminal u et le point d'accès b.

De cette sorte, le deuxième point d'accès b sélectionne des paramètres MCS_u lui permettant d'une part, d'éliminer ou de réduire les interférences provenant des signaux émis par le premier point d'accès b' sur son canal descendant DL' en utilisant les paramètres MCS_b' et la même ressource radio que le terminal u utilise en liaison montante pour communiquer avec le deuxième point d'accès b, et d'autre part, de maximiser l'efficacité spectrale sur sa liaison montante.

Dans le mode décrit ici, la liste L est comprise dans une mémoire du deuxième point d'accès b. Alternativement, cette liste L peut être comprise dans une base de données ou dans une mémoire extérieure au deuxième point d'accès b et accessible par celui-ci.

Au cours d'une étape E204, le deuxième point d'accès b envoie au terminal u une commande d'utilisation de l'ensemble des paramètres MCS_u. Nous supposons que le terminal u applique cette commande.

Au cours d'une étape E206, lorsque le deuxième point d'accès b reçoit sur la même ressource radio (c'est-à-dire ici sur la même fréquence et pendant le même intervalle de temps) des données du terminal u via le canal montant UL, et un signal d'interférence INT généré par le premier point d'accès b' en utilisant la même ressource radio pour communiquer avec le terminal d' sur le canal descendant DL', le deuxième point d'accès b applique une méthode d'élimination du signal d'interférence INT provenant du premier point d'accès b'. A cet effet, le deuxième point d'accès b connait l'ensemble MCS_b' des paramètres utilisés par le premier point d'accès b', les données DATA représentatives de cet ensemble lui ayant été transmises à l'étape E200. De plus, le deuxième point d'accès b connait l'ensemble MCS_u des paramètres utilisés par le terminal u, ce deuxième point d'accès b ayant sélectionné lui-même ces paramètres MCS_u pour le terminal u à l'étape E202. A partir de l'ensemble de paramètres de transmission MCS_b', le deuxième point d'accès b est en mesure d'estimer l'interférence INT générée par le premier point d'accès b' et de la déduire du signal total qu'il a reçu. Il peut également détecter le signal utile provenant du terminal u et le décoder à partir de sa connaissance des paramètres de transmission MCS_u. Ces différentes étapes peuvent être mises en oeuvre par exemple en utilisant une technique d'annulation d'interférence, par exemple de type SIC. Le signal d'interférence INT provient du signal émis par le premier point d'accès b' sur le canal descendant DL' en utilisant la ressource RB et en appliquant les paramètres de transmission MCS_b', propagé du premier point d'accès b' vers le deuxième point d'accès b via un canal de propagation sans fil (ou radio) PR_INT entre ces points d'accès b et b'.

La **figure 3** est un organigramme représentant différentes sous-étapes mises en oeuvre lors de l'étape E102, représentée sur la figure 2, pour obtenir le premier ensemble MCS_b' des paramètres de transmission utilisé par le premier point d'accès b' sur son canal descendant DL' pour communiquer avec le terminal d'. Dans le mode de réalisation envisagé ici, l'étape E102 est mise en oeuvre par le premier point d'accès b'. Dans ce mode de réalisation, le premier point d'accès b' détermine les paramètres de transmission MCS_b' en tenant compte de la qualité du canal de propagation sans fil (ou radio) PR_INT entre les points d'accès b et b' et de la qualité du canal descendant DL' entre le premier point d'accès b' et le terminal d'.

Il convient de noter que le canal de propagation PR_INT entre les points d'accès b et b' correspond à un « canal dit d'interférences » modélisant les interférences générées par les communications en liaison descendante du premier point d'accès b' sur les communications en liaison montante du deuxième point d'accès b (ici, quand des ressources communes sont utilisées par le premier et le deuxième point d'accès). Ce canal de propagation PR_INT n'est pas nécessairement le même que le canal de transmission FIB utilisé par les points d'accès b et b' pour s'échanger des informations, et notamment les paramètres de transmission utilisés par le premier point d'accès b. Ainsi, dans l'exemple envisagé ici où un lien FIB s'appuyant sur une fibre optique est utilisé comme canal de transmission entre les deux points d'accès b et b' pour échanger ces informations, le canal de propagation PR_INT a des caractéristiques différentes du canal de transmission FIB. C'est aussi le cas également si par exemple les points d'accès b et b' s'échangent des informations via des antennes dédiées, distinctes des antennes qu'ils utilisent pour communiquer avec les terminaux sur le réseau NET.

Dans le mode de réalisation décrit ici, le premier point d'accès b' estime la qualité du canal de propagation PR_INT radio entre les points d'accès b et b' à partir de la capacité Cb'_b de ce canal de propagation, et la qualité du canal descendant DL' entre le premier point d'accès b' et le terminal d'à partir de la capacité Cd' du canal descendant DL' entre le premier point d'accès b' et le terminal d'.

A cet effet, dans ce mode de réalisation, l'étape E102 comporte une sous étape E110 d'estimation du canal de propagation PR_INT entre les points d'accès b et b'. Dans cet exemple, l'estimation du canal de propagation est utilisée pour estimer la qualité du canal de propagation PR_INT entre les points d'accès b et b' en évaluant la capacité Cb'_b de ce canal. La façon dont la capacité Cb'_b est estimée est détaillée ultérieurement.

L'étape E102 comporte aussi une sous étape E120 d'estimation d'une capacité Cd' du canal descendant DL' allant du point d'accès b' vers le terminal d'. Cette capacité peut être estimée lors de la connexion du terminal d'au point d'accès b', par exemple à partir d'informations remontées du terminal d' comme un indicateur de la qualité du canal (ou CQI pour Channel Quality Indicator) ou une mesure réalisée par le terminal d' du Rapport Signal-sur-Interférence-plus-Bruit sur ce canal descendant DL'. La façon dont la capacité Cd' est estimée est détaillée ultérieurement.

L'ordre des sous étape E110 et E120 n'est pas important.

Puis, le premier point d'accès b' compare, au cours d'une sous étape E130, les capacités Cb'_b et Cd'.

Dans le mode de réalisation décrit ici, si la capacité Cd' du canal descendant est inférieure ou égale à la capacité Cb'_b du canal de propagation PR_INT entre les deux points d'accès, le premier point d'accès b' détermine au cours d'une sous-étape E140 l'ensemble des paramètres de transmission MCS_b' (par exemple à partir de la liste L) de sorte à maximiser le débit sur le canal descendant, dans la limite de la capacité Cd'. Autrement dit, dans le meilleur cas de figure, la valeur du débit correspondant aux paramètres de transmission sélectionnés MCS_b' est égale à la capacité Cd'.

Si la capacité Cd' du canal descendant est strictement supérieure à la capacité Cb'_b du canal de propagation PR_INT entre les deux points d'accès, le premier point d'accès b' détermine au cours d'une sous-étape E150 les paramètres de transmission MCS_b' (i.e. sélectionne ici les paramètres de transmission MCS_b' dans la liste L) de sorte à ce que la valeur du débit transmis sur le canal descendant DL' soit égale à (ou tout du moins se rapproche le plus possible de) la capacité Cb'_b du canal de propagation PR_INT entre les deux points d'accès.

Dans ce qui suit, nous rappelons la définition et l'expression de la capacité d'un canal de communication, et nous introduisons les expressions des capacités Cb'_b et Cd' estimées (E110 et E120) et comparées (E130) par le premier point d'accès b'.

De façon connue en soi, la capacité d'un canal de communication désigne la limite supérieure du débit pouvant être transmis sur ce canal afin de permettre une transmission fiable des données. La capacité d'un canal peut être définie selon le théorème de Shannon comme le produit de la largeur de la bande passante du canal et du logarithme (binaire dans le cas particulier de la transmission de données binaires sur ce canal) de 1 plus le rapport signal-sur-interférence-plus-bruit SINR. Le rapport SINR est donné par le rapport de la puissance du signal utile reçu, transmis via le canal (sans bruit ni interférence), sur la puissance de bruit et de signaux d'interférences reçus sur ce même canal. L'expression du rapport SINR sur le canal montant UL du terminal u vers le deuxième point d'accès b est donnée ultérieurement en référence à l'équation 1.

On note que le débit transmis sur un canal de communication sans fil dépend du schéma de transmission utilisé pour transmettre les données sur ce canal, c'est-à-dire le cas échéant du schéma de codage du canal considéré, de la modulation utilisée, des délais de traitement, etc. Au contraire, la capacité du canal représente la limite supérieure de ce débit, et ne dépend pas du schéma de transmission. Le débit transmis sur le canal et la capacité du canal sont exprimés en bits par seconde.

En variante, en normalisant l'expression de la capacité donnée ci-dessus par rapport à la bande passante du canal, on obtient une expression de la capacité du canal en bits/seconde/Hz, égale au logarithme (binaire) de 1 plus le rapport signal-sur-interférence-plus-bruit SINR.

Ainsi, la capacité Cu du canal montant UL du terminal u vers le deuxième point d'accès b, lorsque les procédés de l'invention ne sont pas mis en oeuvre, peut être définie, en bits/seconde/Hz, par :

[Math. 1]

$$Cu = log_2(1 + SINR) = log_2\left(1 + \frac{S_b(u)}{S_b(b') + n + RSI + S_b(u')}\right)$$

où $S_b(u)$ est la puissance du signal reçu par le deuxième point d'accès b en provenance du terminal u, $S_b(b')$ est la puissance du signal d'interférence reçu par le deuxième point d'accès b en provenance du premier point d'accès b', n est la puissance de bruit ambiant, RSI (pour « Residual Self-Interference » en anglais) est la puissance des signaux d'auto-interférences causées par l'émission de signaux par le deuxième point d'accès b (sur le canal descendant vers le terminal d par exemple) et $S_b(u')$ est la puissance des signaux reçus par le deuxième point d'accès b en provenance d'autres terminaux (le terminal u' par exemple) partageant la même ressource radio que le terminal u.

De façon générale, la puissance $S_i(j)$ du signal émis par une entité i via un canal de transmission (ou de communication) et reçu par une entité j peut être définie par le produit du gain $h_{i,j}$ du canal de transmission entre l'entité i et l'entité j, d'un gain G d'antennes entre ces entités i et j, et de la puissance d'émission Pj appliquée par l'entité j. Ainsi, à titre d'exemple la puissance $S_b(u)$ peut être définie par:

[Math. 2]

$$S_b(u) = h_{u,b} G_{u,b} P_u$$

De façon similaire, la capacité Cd' du lien descendant DL' du premier point d'accès b' vers le terminal d' peut être définie par :

[Math. 3]

$$Cd' = log_2\left(1 + \frac{S_{d'}(b')}{S_{d'}(b) + S_{d'}(u') + S_{d'}(u) + n}\right)$$

Le premier point d'accès b' détermine (E102) ici l'ensemble MCS_b' des paramètres de transmission qu'il utilise en fonction de cette capacité Cd', de sorte à maximiser le débit sur le lien descendant DL' dans la limite de la capacité Cd' de ce lien descendant DL'.

La capacité Cb'_b du lien radio du premier point d'accès b' vers le deuxième point d'accès b peut être définie par :

[Math. 4]

$$Cb'\_b = log_2\left(1 + \frac{S_b(b')}{S_b(u) + n + RSI + S_b(u')}\right)$$

En mettant en oeuvre les procédés de l'invention, lorsque la capacité Cd' est inférieure ou égale à la capacité Cb'_b, ou lorsque la capacité Cd' est supérieure à la capacité Cb'_b et lorsque le premier point d'accès b' limite (E150) le débit sur le canal descendant, le deuxième point d'accès b est en mesure de supprimer l'interférence générée par le premier point d'accès b (ayant un niveau de puissance $S_b(b')$) (grâce à la connaissance du premier ensemble MCS_b' de paramètres de transmission. La capacité Cu du lien montant est alors définie par :

[Math. 5]

$$Cu = log_2\left(1 + \frac{S_b(u)}{n + RSI + S_b(u')}\right)$$

Les différentes formules de capacité correspondent au cas où le signal d'interférence généré par le premier point d'accès b' est lié à l'utilisation de la même ressource radio sur son canal descendant DL' que le deuxième point d'accès b sur son canal montant UL. Comme mentionné précédemment, l'invention s'applique également dans d'autres contextes (par exemple, mode HD, utilisation de ressources adjacentes, etc.) ; l'homme du métier saurait sans difficulté adapter les équations ci-dessus à ces autres contextes. Ainsi, par exemple, en mode HD, les formules de capacités peuvent s'écrire sous la forme (en faisant l'hypothèse que seuls les éléments du réseau qui ont une puissance élevée sont sources d'interférences et en utilisant les notations introduites précédemment) :

[Math. 6] $Cu = log_2\left(1 + \frac{S_b(u)}{S_b(b')+n}\right)$

(en l'absence de mise en oeuvre de l'invention)

[Math. 7] $Cd' = log_2\left(1 + \frac{S_{d'}(b')}{S_{d'}(b)+n}\right)$

[Math. 8] $Cb'\_b = log_2\left(1 + \frac{S_b(b')}{S_b(u)+n}\right)$

[Math. 9] $Cu = log_2\left(1 + \frac{S_b(u)}{n}\right)$

(lorsque l'invention est mise en oeuvre)

Dans le premier mode de réalisation qui vient d'être décrit, nous avons considéré un système SYS comprenant deux points d'accès b et b', le point d'accès b mettant en oeuvre le procédé de sélection selon l'invention et le point d'accès b' mettant en oeuvre le procédé de communication selon l'invention. On note que lorsque les points d'accès sont configurés en mode FD, ils peuvent utiliser en liaison montante et en liaison descendante les mêmes ressources radio, et donc l'hypothèse qui a été envisagée ci-dessus où le point d'accès b' est un interféreur pour le point d'accès b peut également être valable dans l'autre sens (i.e. le point d'accès b est un interféreur pour le point d'accès b'). On peut donc envisager, dans un mode particulier de réalisation, que chacun des points d'accès b et b' soient configurés pour mettre en oeuvre tantôt un procédé de communication selon l'invention tantôt un procédé de sélection selon l'invention.

La **figure 4** est un organigramme représentant les étapes d'un procédé de communication et les étapes d'un procédé de sélection conformes à l'invention, dans un deuxième mode particulier de réalisation dans lequel ils sont mis en oeuvre par une entité centrale D de contrôle du réseau NET. Autrement dit, dans ce deuxième mode de réalisation, le premier dispositif selon l'invention qui est apte à mettre en oeuvre le procédé de communication et le deuxième dispositif selon l'invention qui est apte à mettre en oeuvre le procédé de sélection selon l'invention sont compris dans l'entité centrale D de contrôle du réseau NET.

L'étape E101 décrite ci-après est une étape du procédé de communication selon l'invention. Les étapes E100, E202, E204 décrites ci-après sont des étapes du procédé de sélection selon l'invention.

Au cours d'une étape E100, l'entité centrale D détermine le premier ensemble MCS_b' de paramètres de transmission destiné à être utilisé par le premier point d'accès b'. En particulier, la détermination E100 de cet ensemble MCS_b' peut tenir compte de la capacité Cd' du lien descendant DL' entre le premier point d'accès b' et le terminal d' de sorte à maximiser le débit sur ce lien DL' dans la limite de la capacité Cd' de ce lien. Elle peut s'appuyer à cette fin sur des informations de qualité du canal descendant DL' remontées par le terminal d'et/ou le point d'accès b'.

Au cours d'une étape E101, l'entité centrale D envoie une commande au premier point d'accès b' pour que celui-ci utilise l'ensemble de paramètres MCS_b' sur son canal descendant DL'.

Au cours de la même étape E101, l'entité centrale D envoie au deuxième point d'accès b des données DATA représentatives du premier ensemble MCS_b' de paramètres de transmission. Dans le mode décrit ici, l'entité centrale D envoie les données DATA au deuxième point d'accès b en même temps qu'elle envoie la commande au premier point d'accès b'. Cependant, il est envisageable que ces deux envois soient effectuées au cours de deux étapes différentes, peu importe l'ordre de ces étapes.

Le premier point d'accès b' reçoit la commande au cours d'une étape E102 et utilise le premier ensemble MCS_b' de paramètres de transmission sur son canal descendant DL'.

Le deuxième point d'accès b reçoit les données DATA au cours d'une étape E200, similaire à l'étape E200 décrite en référence à la figure 2.

Au cours d'une étape E202, l'unité centrale D sélectionne le deuxième ensemble MCS_u de paramètres de transmission, cet ensemble étant destiné à être utilisé par le terminal u sur le canal montant UL établi avec le deuxième point d'accès b. La sélection E202 tient compte ici de la capacité Cu du lien montant UL. La capacité Cu peut être par exemple estimée par le deuxième point d'accès b et envoyée par ce dernier à l'entité centrale D.

Au cours d'une étape E204, l'entité centrale D envoie à destination du terminal u, via le deuxième point d'accès b, une commande d'utilisation du deuxième ensemble de paramètres de transmission MCS_u.

Au cours d'une étape E204b, le deuxième point d'accès b reçoit et transfère cette commande vers le terminal u.

Au cours d'une étape E206, similaire à l'étape E206 décrite en référence à la figure 2, le deuxième point d'accès b peut, grâce à la connaissance du premier ensemble MCS_b' (E200) et du deuxième ensemble MCS_u (E204b), éliminer les interférences INT générées par le premier point d'accès b'.

Comme évoqué précédemment, dans le premier et le deuxième mode de réalisation, nous avons considéré un système SYS comprenant seulement deux points d'accès b et b'. Cette hypothèse n'est pas limitative en soi, et un nombre plus important de points d'accès peut être envisagé au sein du système SYS. Dans un tel mode de réalisation, chaque point d'accès peut subir des interférences de plusieurs points d'accès.

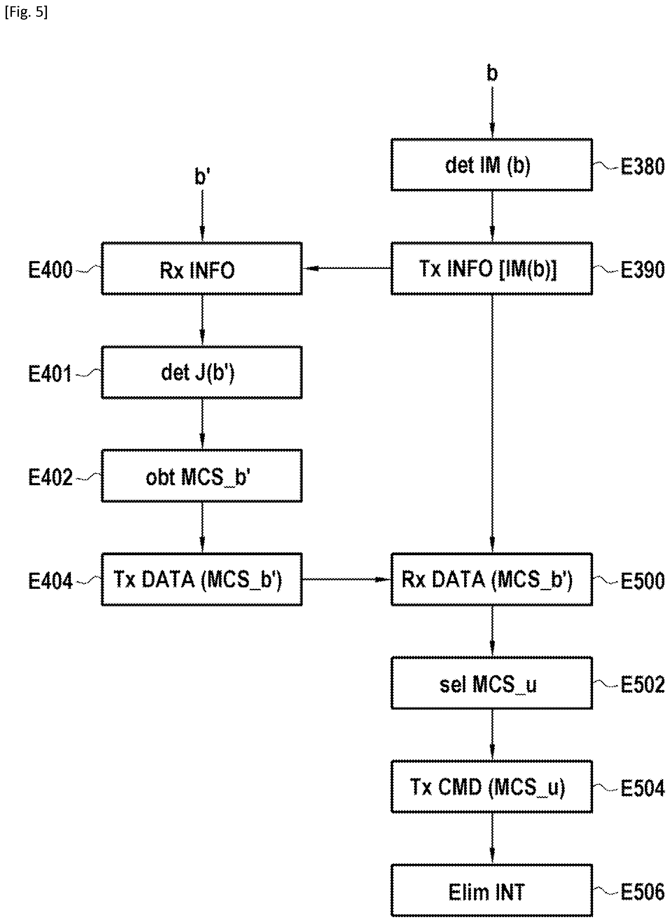

La **figure 5** est un organigramme représentant les étapes d'un procédé de communication conforme à l'invention, de données représentatives d'un ensemble de paramètres de transmission utilisé par le premier point d'accès b' et des étapes d'un procédé de sélection d'un deuxième ensemble de paramètres de transmission conforme à l'invention, dans un troisième mode particulier de réalisation.

Dans ce troisième mode de réalisation, contrairement aux modes décrits en référence aux figures 1 à 4, le système SYS comporte plus que deux points d'accès, à savoir, le premier point d'accès b', le deuxième point d'accès b et au moins un troisième point d'accès b", b‴, etc.

Comme dans le premier mode de réalisation décrit en référence aux figures 1 à 3, on suppose ici que le premier dispositif conforme à l'invention est compris dans le premier point d'accès b' et que le deuxième dispositif conforme à l'invention est compris dans le deuxième point d'accès b. De ce fait, le premier point d'accès b' met en oeuvre le procédé de communication conforme à l'invention et le deuxième point d'accès b met en oeuvre le procédé de sélection conforme à l'invention. On note toutefois que cette hypothèse n'est pas limitative et on pourrait envisager un autre mode de réalisation similaire au deuxième mode de réalisation dans lequel le premier et le deuxième dispositif selon l'invention sont compris dans une entité centrale D de gestion du réseau NET.

Sur la figure 5, les étapes E400, E401, E402 et E404 du procédé de communication selon l'invention sont mises en oeuvre par le premier point d'accès b', tandis que les étapes E380, E390, E500, E502, E504 et E506 du procédé de sélection selon l'invention sont mises en oeuvre par les autres points d'accès du système SYS, et en particulier par le deuxième point d'accès b. Nous décrivons dans la suite, par souci de simplification, uniquement les étapes du procédé de sélection telles qu'elles sont mises en oeuvre par le deuxième point d'accès b. Ces étapes sont mises en oeuvre de manière similaire ou identique par les autres points d'accès du système SYS interférés par le premier point d'accès b'. En outre, comme mentionné précédemment, on peut également envisager que chacun des points d'accès du système SYS soit en mesure de mettre en oeuvre tantôt le procédé de communication tantôt un procédé de sélection conformes à l'invention selon s'il est interféreur à l'égard d'un autre point d'accès du système ou interféré par un autre point d'accès du système.

Au cours d'une étape E380, le deuxième point d'accès b (et de façon similaire, tous les autres points d'accès du système SYS mettant en oeuvre un procédé de sélection conforme à l'invention) détermine un ensemble noté IM(b) identifiant tous les points d'accès jouant le rôle d'interféreurs à l'égard du point d'accès b. Nous rappelons que par points d'accès interféreurs à l'égard du point d'accès b, on entend au sens de l'invention les points d'accès du système SYS qui utilisent sur leurs canaux descendants des ressources qui sont susceptibles de créer des signaux d'interférences sur les communications mises en oeuvre par le point d'accès b sur son canal montant UL établie avec le terminal u. Dans l'exemple illustratif envisagé ici, ces signaux d'interférences résultent de l'utilisation d'une même ressource radio RB par les points d'accès interféreurs en liaison descendante et par le point d'accès b en liaison montante.

Par souci de simplification, on omet d'indexer dans la suite de la description l'ensemble IM(b) par rapport à la ressource RB, et on ne considère que la ressource radio RB ; toutefois il va de soi que le point d'accès b peut déterminer un tel ensemble pour chacune des ressources radio RB qu'il utilise en commun avec d'autres points d'accès du système SYS.

Dans le mode de réalisation décrit ici, l'ensemble IM(b) comprend (i.e. identifie) au plus M points d'accès interféreurs, M désignant un nombre entier correspondant au nombre maximal de signaux d'interférence que le point d'accès b est en mesure d'éliminer grâce à la technique d'élimination d'interférences qu'il met en oeuvre.

En variante, l'ensemble des interféreurs déterminé par le point d'accès b contient tous les interféreurs potentiels à l'égard du point d'accès b indépendamment de sa capacité à éliminer les signaux d'interférence générés par ces interféreurs (i.e. il s'agit alors d'un ensemble I(b)).

Nous supposons dans cet exemple que le deuxième point d'accès b a déterminé au cours de cette étape E380 que le premier point d'accès b' fait partie de l'ensemble de ses interféreurs IM(b).

L'ensemble IM(b) peut être déterminé (E380) par exemple à partir des puissances de signaux reçus par le deuxième point d'accès b des différents points d'accès du réseau NET. De tels signaux sont par exemple les signaux de synchronisation émis par les points d'accès du système SYS et reçus par le deuxième point d'accès. L'ensemble IM(b) déterminé peut ainsi comprendre tous les points d'accès desquels le deuxième point d'accès b est en mesure de recevoir un signal de synchronisation, ou en variante, les points d'accès desquels les signaux reçus présentent un niveau de signal supérieur à un seuil prédéterminé, ou encore s'il existe plus de M points d'accès répondant au critère retenu, les M points d'accès correspondant aux M interféreurs les plus forts à l'égard du point d'accès b.

En variante, l'ensemble IM(b) peut être déterminé (E380) à partir des distances séparant le point d'accès b des autres points d'accès, l'ensemble IM(b) comprenant par exemple tous les points d'accès dont la distance au point d'accès b n'excède pas un seuil prédéterminé ou s'il existe plus de M points d'accès répondant à ce critère, les M points d'accès les plus proches du point d'accès b. En particulier, lorsque le réseau NET est de type C-RAN, ces distances peuvent être envoyées par un équipement central de contrôle du réseau NET (tel que l'entité D centrale de gestion considérée précédemment) au point d'accès b (et éventuellement à tous les points d'accès au réseau). Alternativement, les distances séparant le point d'accès b des autres points d'accès au réseau NET peuvent être enregistrées par un administrateur ou par un opérateur du réseau NET, au niveau d'une mémoire accessible par le deuxième point d'accès b.

On note qu'aucune limitation n'est attachée à la façon dont les points d'accès interféreurs du point d'accès b sont identifiés dans l'ensemble IM(b). Il peut s'agir d'identifiants matériels des points d'accès, ou d'identifiants de cellules couvertes par les points d'accès, etc. dès lors que ces identifiants permettent de désigner de manière univoque les points d'accès concernés.

Au cours d'une étape E390, le deuxième point d'accès b envoie une information INFO représentative de l'ensemble IM(b) à tous les points d'accès identifiés dans l'ensemble IM(b) pour les informer du fait qu'ils constituent des points d'accès interféreurs de ce deuxième point d'accès b (pour la ressource radio RB ici). Il utilise par exemple à cet effet la liaison directe FIB dont il dispose pour communiquer avec chacun des points d'accès. L'information INFO peut correspondre à l'ensemble IM(b) des identifiants des points d'accès interféreurs du point d'accès b à proprement parler, ou résulter d'une compression, d'un cryptage de cet ensemble IM(b), ou encore prendre la forme d'une adresse mémoire à partir de laquelle cet ensemble IM(b) peut être obtenu, etc.

Alternativement, au cours de l'étape E390, le deuxième point d'accès b peut envoyer l'information INFO à une partie seulement des points d'accès identifiés dans l'ensemble IM(b). Cette partie peut être sélectionnée en fonction d'un critère préétabli tel qu'une puissance d'émission par les points d'accès sélectionnés supérieure à un seuil ou une distance séparant ces points d'accès du deuxième point d'accès b supérieure à un seuil.

Alternativement, le deuxième point d'accès peut communiquer l'information INFO à un dispositif tiers du réseau NET (par exemple à l'entité centrale D de gestion ou de contrôle du réseau NET évoquée précédemment), et c'est ce dispositif tiers qui transmet l'information INFO au premier point d'accès b'.

Au cours d'une étape E400, on suppose que le premier point d'accès b', faisant partie de l'ensemble IM(b), reçoit l'information INFO du deuxième point d'accès b. Si le point d'accès b est un interféreur au sens de l'invention pour d'autres points d'accès du système SYS mettant en oeuvre le procédé de sélection conforme à l'invention, il peut également recevoir des informations INFO de la part de chacun de ces autres points d'accès.

Au cours d'une étape E401, le premier point d'accès b' agrège les informations INFO qu'il a reçues, et détermine à partir des informations agrégées l'ensemble noté J(b') des points d'accès dits « interférés » du système SYS pour lesquels le premier point d'accès b' est identifié comme un point d'accès interféreur au sens de l'invention.

Dans l'exemple décrit ici, l'ensemble J(b') comporte tous les points d'accès interférés par le premier point d'accès b'. Alternativement, l'ensemble J(b') peut comporter un nombre N limité de points d'accès. Par exemple, l'ensemble J(b') peut comprendre les N points d'accès les plus interférés par le premier point d'accès b', ces points d'accès pouvant être déterminés en fonction de la capacité respective de leur lien de communication sans fil avec le premier point d'accès b'.

Dans l'exemple envisagé ici, on suppose que l'ensemble J(b') comporte plusieurs points d'accès dont le point d'accès b.

Au cours d'une étape E402, le premier point d'accès b' obtient un ensemble MCS_b' de paramètres de transmission sur son canal descendant DL'. Cet ensemble MCS_b' est déterminé ici en fonction de la capacité Cd' du lien descendant du premier point d'accès b' utilisant la ressource RB et des capacités de chacun des canaux de propagation sans fil séparant le premier point b' des points d'accès de l'ensemble J(b') (et donc notamment ici de la capacité Cb'_b du canal de propagation radio entre le premier point d'accès b' et le deuxième point d'accès b).

En variante, l'ensemble MCS_b' peut être déterminé en fonction de la capacité Cd' du lien descendant DL' et des capacités de chacun des canaux de transmission entre le premier point b' et d'une partie seulement des points d'accès de l'ensemble J(b'), cette partie étant sélectionnée sur la base d'un critère prédéterminé.

Plus précisément, selon un exemple de réalisation, le premier point d'accès b' peut obtenir (E402) le premier ensemble MCS_b' en fonction de la capacité Cd' du lien descendant DL' et de la plus petite des capacités des canaux de propagation entre le premier point b' et chacun des points d'accès de l'ensemble J(b'), notée Cmin.

Notamment, et de façon similaire à ce qui a été décrit précédemment en référence à l'étape E130 illustrée sur la figure 3, si la capacité Cd' du canal descendant DL' est inférieure ou égale à la plus petite capacité Cmin des canaux de propagation, le premier point d'accès b' peut déterminer un ensemble des paramètres de transmission MCS_b' permettant de maximiser le débit sur le canal descendant DL' dans la limite de la capacité Cd'.

Si au contraire, la capacité Cd' du canal descendant est supérieure à la capacité Cmin, le premier point d'accès b' peut déterminer des paramètres de transmission MCS_b' de sorte à ce que la valeur du débit transmis sur le canal descendant DL' soit égale à (ou tout du moins se rapproche le plus possible de) la capacité Cmin. De cette façon, on s'assure que tous les points d'accès interférés par le premier point d'accès b' seront en mesure d'éliminer l'interférence générée par le premier point d'accès b' lors de ses communications avec les paramètres de transmission MCS_b' sur son canal descendant DL'.

Selon un autre exemple de réalisation, le premier point d'accès b' peut obtenir (E402) le premier ensemble MCS_b' en fonction de la capacité Cd' du lien descendant DL' et des capacités des canaux de propagation entre le premier point b' et les points d'accès de l'ensemble J(b') qui sont supérieures à un seuil donné. Le seuil peut dépendre notamment de la qualité de service souhaitée sur la liaison descendante DL'. Dans cet exemple de réalisation, l'ensemble de paramètres de transmission MCS_b' retenu ne pourra pas permettre à tous les points d'accès interférés d'éliminer l'interférence en provenance du premier point d'accès b' (notamment ceux pour lesquels la capacité des canaux de propagation avec le premier point d'accès b' est trop faible), mais il permet d'assurer une qualité de service cible sur la liaison descendante DL'.

La politique retenue pour déterminer le premier ensemble MCS_b' en fonction de la capacité du canal Cd' et des capacités des canaux de propagation entre le premier point d'accès b' et les points d'accès interférés par le premier point d'accès b' résulte d'un compromis et peut être définie ou paramétrée par l'opérateur du réseau NET en fonction de divers critères (qualité de service en liaison descendante et/ou en liaison montante, efficacité spectrale, etc.).

Au cours d'une étape E404 similaire à l'étape E104 décrite en référence à la figure 2, le premier point d'accès b' envoie à tout ou partie de l'ensemble J (b') des données DATA représentatives de l'ensemble des paramètres MCS_b' qu'il a ainsi déterminé. Le premier point d'accès b' est configuré pour envoyer les données DATA à tous les points d'accès identifiés dans l'ensemble J(b') ou à une partie seulement de cet ensemble, sélectionnée en fonction d'un critère donné. Ainsi, par exemple, les données DATA peuvent être envoyées uniquement aux points d'accès interférés mettant en oeuvre une méthode d'élimination d'interférence (telle qu'une méthode SIC) ou à un nombre déterminé des points d'accès les plus interférés, déterminés en fonction de la capacité respective de leur lien de communication sans fil avec le premier point d'accès b'. Dans le mode décrit ici, nous supposons que le premier point d'accès envoie ces données DATA en particulier au deuxième point d'accès b.

Le deuxième point d'accès b reçoit ces données DATA au cours d'une étape E500 similaire à l'étape E200 décrite en référence à la figure 2.

Dans le mode de réalisation décrit ici, lorsque le deuxième point d'accès b reçoit (E500) des données DATA d'un autre point d'accès du réseau NET, il vérifie si ce autre point d'accès fait partie de l'ensemble IM(b). Si ce n'est pas le cas, le deuxième point d'accès b ignore les données DATA correspondant à cet autre point d'accès (notamment pour déterminer l'ensemble de paramètres de transmission MCS_u, comme détaillé ci-après).

Cette étape E500 est suivie d'une étape E502 de sélection par le deuxième point d'accès b d'un ensemble MCS_u de paramètres de transmission destiné à être utilisé par le terminal u sur le canal montant le connectant au point d'accès b, d'une étape E504 d'envoi d'une commande au terminal u pour appliquer cet ensemble de paramètres MCS_u, et d'une étape E506 d'application d'une technique d'annulation d'interférence pour éliminer les interférences causées par le premier point d'accès b' sur le canal montant entre le terminal u et le deuxième point d'accès b, les étapes E502, E504 et E406 étant similaires aux étapes E202, E204 et E206 décrites en référence à la figure 2.

On note que lors de l'étape E500, le deuxième point d'accès b peut recevoir des données DATA de plusieurs points d'accès interféreurs (incluant le premier point b'), ces données étant représentatives des paramètres de transmission utilisés par ces différents points d'accès interféreurs. Dans ce cas, le deuxième point d'accès b sélectionne (E502) l'ensemble des paramètres MCS_u en fonction de tous ou au moins d'une partie des données DATA reçues de différents points d'accès.

Plus précisément, le deuxième point d'accès b sélectionne un ensemble de paramètres de transmission MCS_u différent de chacun des ensembles de paramètres de transmission représentés par les données DATA qu'il a reçus des différents points d'accès interféreurs. Par ensemble de paramètres de transmission différent, on entend qui comprend au moins un paramètre de transmission différent.

En variante, le deuxième point d'accès b sélectionne un ensemble de paramètres de transmission MCS_u qui diffère de chacun des ensembles de paramètres de transmission représentés par les données DATA qu'il a reçus d'une partie seulement des points d'accès qui l'interfèrent, par exemple des points d'accès qui génèrent vis-à-vis du deuxième point d'accès b les signaux d'interférence les plus puissants. Dans ce cas, seuls les signaux d'interférence générés en appliquant des paramètres de transmission différents des paramètres de transmission MCS_u pourront être éliminés par le deuxième point d'accès b.

Dans un autre mode de réalisation, le deuxième point d'accès b ne détermine pas l'ensemble IM(b), ou au moins ne communique pas l'information INFO au premier point d'accès b'. Le premier point d'accès b' peut déterminer (E401) l'ensemble J(b') à partir des puissances des signaux reçus par le premier point d'accès b' des différents points d'accès du réseau (b dans l'exemple particulier envisagé ici). De tels signaux sont par exemple les signaux de synchronisation émis par les points d'accès du réseau et reçus par le premier point d'accès b'. L'ensemble J(b') déterminé peut ainsi comprendre tous les points d'accès desquels le premier point d'accès b' est en mesure de recevoir un signal de synchronisation, ou en variante, les points d'accès desquels les signaux reçus présentent un niveau de signal supérieur à un seuil prédéterminé.

En variante, l'ensemble J(b') peut être déterminé (E401) à partir des distances séparant le point d'accès b' et les autres points d'accès, l'ensemble J(b') comprenant par exemple tous les points d'accès dont la distance au point d'accès b' n'excède pas un seuil prédéterminé. En particulier, lorsque le réseau NET est de type C-RAN, ces distances peuvent être envoyées par un équipement central D de contrôle du réseau NET au point d'accès b' (et éventuellement à tous les points d'accès au réseau). Alternativement, les distances séparant le point d'accès b' des autres points d'accès au réseau NET peuvent être enregistrées par un administrateur ou par un opérateur du réseau NET, au niveau d'une mémoire accessible par le point d'accès b'.

A titre illustratif, des simulations de type Monte-Carlo ont été réalisées par les inventeurs, montrant les gains atteints par la présente invention sur les capacités Cu, Cb'_b et Cd' dans différents contextes. Ces simulations correspondent au mode de réalisation décrit en référence aux figures 1 à 3 dans lequel le système SYS ne comporte que le premier et le deuxième point d'accès, b' et b. Elles se fondent sur l'hypothèse que dès lors que le deuxième point d'accès b' connait, grâce à l'invention, les paramètres de transmission du premier point d'accès b qui interfère ses communications en liaison montante, il est en mesure d'éliminer le signal d'interférence qu'il génère au moyen d'une technique d'élimination d'interférence connue en soi. Ces simulations s'appuient donc sur les formules de capacités introduites précédemment, moyennées sur plusieurs tirages de positions des terminaux des utilisateurs, dans un scénario macro-cellulaire et dans un scénario micro-cellulaire.

Ainsi, des premières simulations ont été réalisées pour un réseau NET 4G tel que représenté à la figure 1 comprenant deux macro-cellules gérées par deux points d'accès b' et b. On rappelle que des macro-cellules sont typiquement envisagées pour couvrir des zones étendues et peu denses telles que des zones rurales ou le long des autoroutes. Toutefois, des macro-cellules peuvent être utilisées dans des zones plus denses (c'est-à-dire des zones avec un nombre de terminaux à connecter plus élevé) que des zones rurales.

Dans ce premier scénario, les simulations s'appuient sur les hypothèses suivantes :

- largeur de bande du canal de transmission entre le premier et le deuxième point d'accès (b', b): 20 MHz
- largeur de bande occupée par la ressource radio RB (pour « Resource Block » en anglais) utilisée par le premier point d'accès b' sur son canal descendant et par le deuxième point d'accès b sur le canal montant entre ce point d'accès b et le terminal u : 180 kHz
- puissance d'émission par chaque point d'accès : $Pb = Pb' = 46$ dBm
- puissance d'émission par les terminaux u et u' : $Pu = Pu' = 23$ dBm
- gain des antennes des points d'accès $Gb = Gb' = 11$dBi
- gain des antennes des terminaux u et u' : $Gu = Gu' = 0$ dBi
- hauteur des points d'accès : 32 mètres
- distance ISD (pour « Inter Site Distance » en anglais) entre les deux points d'accès : 500m
- hauteur des terminaux u, u', d et d' : 1.5 m
- facteur de bruit ambiant n = 8 dB
- densité spectrale de puissance du bruit thermique : -174 dBm/Hz
- constante positive B relative à la technique d'annulation des auto interférences : B = -100 dB (nous rappelons que la puissance d'auto interférences RSI(i) d'un point d'accès i (i désigne b ou b') peut être exprimée par: $RSI(i) = B \cdot Pi$ et Pi désigne la puissance émise par le point d'accès i) ;
- constante non nulle $K_{i,j}$ qui dépend de la fréquence porteuse d'un canal entre une entité i et une entité j prise égale à 1 quels que soient i et j ;
- exposant d'affaiblissement $nu_{i,j}$ sur un canal entre des entités i et j pris égal à 2 quels que soient i et j (nous rappelons que le gain $h_{i,j}$ d'un canal entre des entités i et j peut être défini par $h_{i,j} = K_{i,j} \cdot (r_{i,j})^{\wedge}(-nu_{i,j})$ où $r_{i,j}$ est la distance entre les entités i et j) ;
- nombre de tirages considérés dans la méthode Monte Carlo : $10^6$.

Le tableau 1 résume les résultats des simulations obtenus dans un cas macro-cellulaire.

[Table 1]

| | Cu | Cd' | Cb'_b |
|---|---|---|---|
| Valeurs des capacités Cu, Cd' et Cb'_b obtenues pour des points d'accès en FD (bits/s/Hz) sans communication des données DATA entre les points d'accès b' et b | Cu = 0.03 | Cd' = 4.27 | Cb'_b = 6.82 |
| Valeurs des capacités Cu, Cd' et Cb'_b et des débits Ru et Rd' obtenus avec l'invention lorsque Cd' ≤ Cb'_b | Ru = Cu = 3.99 | Rd' = Cd' 3.84 | Cb'_b = 7.20 |
| Valeurs des capacités Cu, Cd' et Cb'_b et des débits Ru et Rd' obtenus avec l'invention lorsque Cd' > Cb'_b | Ru = Cu = 6.25 | Rd'= 4.93 Cd'= 6.38 | Cb'_b = 4.93 |

Il convient de noter que dans les simulations reportées dans le tableau 1 et compte tenu des hypothèses de simulation de ce scénario macro-cellulaire (notamment la distance ISD entre les points d'accès b et b', leurs hauteurs et leurs puissances d'émission Pb et Pb'), la probabilité d'occurrence du cas où la capacité Cd' est inférieure ou égale à la capacité Cb'_b est de 83%, la probabilité d'occurrence du cas où la capacité Cd' est strictement supérieure à la capacité Cb'_b étant de 17%.

Nous notons dans les résultats reportés dans le tableau 1 que le débit Rd' transmis sur le canal descendant lorsque la capacité Cd' est strictement supérieur à la capacité Cb'_b est égale à la valeur moyenne de la capacité Cb'_b dans le cas où Cd'> Cb'_b.

Les simulations réalisées montrent que l'invention permet d'améliorer substantiellement la capacité Cu du lien montant dans le cas macro-cellulaire (une amélioration d'un facteur de 13300% dans le cas où Cd' ≤ Cb'_b et d'un facteur de 20833% dans le cas où Cd'> Cb'_b est constatée dans les résultats reportés dans le tableau 1). Cette amélioration est permise notamment grâce à la communication des données DATA représentatives des paramètres de transmission MCS_b' au point d'accès b, à l'élimination par le point d'accès b' des interférences générées par le point d'accès b', et au choix de paramètres de transmission permettant au point d'accès b' d'optimiser le débit transmis sur sa liaison montante.

Ainsi l'invention permet de façon très avantageuse l'utilisation du mode full duplex et l'exploitation des gains résultant de cette utilisation dans le cas macro-cellulaire, ce qui n'était permis par l'état de la technique.

D'autres simulations ont été réalisées pour un réseau NET comprenant deux microcellules gérées par deux points d'accès b' et b. Nous rappelons que les microcellules sont classiquement utilisées pour couvrir des zones denses telles que des zones urbaines.

Dans ces simulations, les puissances d'émission des points d'accès Pb et Pb' sont égales à 30 dBm, les deux points d'accès b et b' ont une hauteur de 10 mètres, et la distance ISD entre ces deux points d'accès est de 200 mètres. Les autres hypothèses de simulations sont identiques aux hypothèses considérées pour le scénario macro-cellulaire.

Le tableau 2 présente les résultats de ces simulations obtenues dans le scénario micro-cellulaire :

[Table 2]

| | Cu | Cd' | Cb'_b |
|---|---|---|---|
| Valeurs des capacités Cu, Cd' et Cb'_b obtenues pour des points d'accès en FD (bits/s/Hz) sans communication des données DATA entre les points d'accès b' et b | Cu = 0.72 | Cd' = 3.80 | Cb'_b= 2.07 |
| Valeurs des capacités Cu, Cd' et Cb'_b et des débits Ru et Rd' obtenus avec l'invention lorsque Cd' ≤ Cb'_b | Ru = Cu = 3.50 | Rd'= Cd' 1.55 | Cb'_ b=2.81 |
| Valeurs des capacités Cu, Cd' et Cb'_b et des débits Ru et Rd' obtenus avec l'invention lorsque Cd' > Cb'_b | Ru = Cu = 4.88 | Rd' = 1.82 Cd'=4.58 | Cb'_b = 1.82 |

Nous notons que compte tenu des hypothèses de simulation de ce scénario micro-cellulaire (notamment la distance ISD entre les points d'accès b et b', leur hauteur et leurs puissances d'émission Pb et Pb'), la probabilité d'occurrence du cas où la capacité Cd' est inférieure ou égale à la capacité Cb'_b est de 26%, la probabilité d'occurrence du cas où la capacité Cd' est strictement supérieure à la capacité Cb'_b étant de 74%.

Les simulations montrent que l'invention permet d'améliorer la capacité Cu du lien montant d'un facteur de 386% dans le cas où la capacité Cd' est inférieure ou égale à la capacité Cb'_b.

Dans le cas où la capacité Cd' est supérieure à la capacité Cb'_b, la capacité Cu du lien montant est améliorée d'un facteur de 578%.

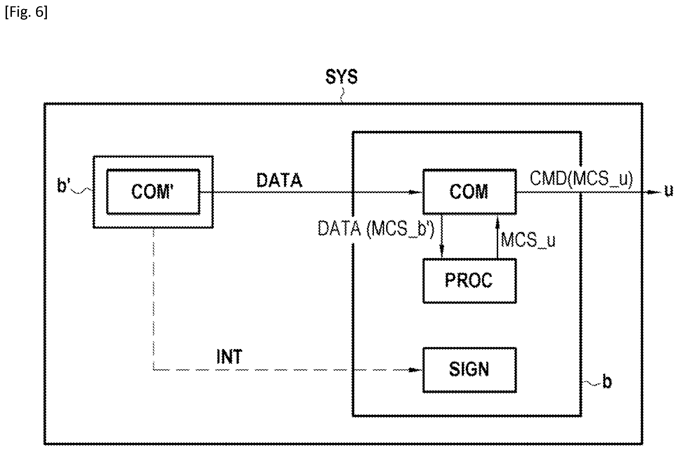

La **figure 6** représente des architectures fonctionnelles, selon un mode de réalisation de l'invention, d'un système SYS conforme à l'invention comportant le premier et le deuxième point d'accès b' et b.

Dans le mode de réalisation illustré à la figure 6, le premier point d'accès b' comporte un premier dispositif réseau conforme à l'invention et met en oeuvre un procédé de communication conforme à l'invention. Dans ce mode, le deuxième point d'accès b comporte un deuxième dispositif réseau conforme à l'invention et met en oeuvre un procédé de sélection conforme à l'invention.

Le système SYS comporte les deux points d'accès b' et b qui partagent ici une même ressource RB de communication sans fil. Le premier point d'accès b' constitue un point d'accès interféreur pour le deuxième point d'accès b : il utilise sur son canal descendant DL' une même ressource radio RB que le terminal u utilise pour communiquer, via un canal montant UL, avec le deuxième point d'accès b.

Le premier point d'accès b' comprend un module de communication COM' configuré pour envoyer au deuxième point d'accès b les données DATA représentatives de l'ensemble MCS_b' des paramètres de transmission utilisés par le premier point d'accès b' sur un de ses canaux descendants, tel que son canal descendant DL' vers le terminal d'.

Le deuxième point d'accès b met en oeuvre une méthode d'annulation d'interférences (par exemple une méthode de type annulation successive d'interférences ou SIC) et comprend :

- un module de communication COM apte à ou configuré pour recevoir, en provenance du premier point d'accès b', les données DATA relatives au premier ensemble MCS_b' de paramètres de transmission utilisé par le premier point d'accès b' sur au moins un de ses canaux descendants, tel que le canal DL' ;
- un module de détermination PROC configuré pour sélectionner à partir de la liste L de paramètres de transmission, en fonction des données reçues DATA, le deuxième ensemble MCS_u de paramètres de transmission pour être utilisé par le terminal u sur le canal montant UL entre ce terminal u et le deuxième point d'accès b, au moins un paramètre du deuxième ensemble MCS_u étant différent des paramètres du premier ensemble MCS_b';

le module de communication COM étant configuré pour envoyer au terminal u une commande CMD d'utilisation du deuxième ensemble de paramètres MCS_u.

Le deuxième point d'accès b comporte en outre un module de traitement de signaux SIGN configuré pour éliminer, en connaissant (et en utilisant) les données reçues DATA et le deuxième ensemble de paramètres MCS_u, des interférences INT générées par le premier point d'accès b' sur le canal montant UL du deuxième point d'accès b.

Dans le mode décrit précédemment en référence à la figure 6, le premier point d'accès b' comporte un premier dispositif de réseau conforme à l'invention et met en oeuvre un procédé de communication conforme à l'invention. Alternativement, le procédé de communication peut être mis en oeuvre par une autre entité du réseau NET, distincte du premier point d'accès b', comme par exemple dans le cas d'un réseau NET centralisé, par une entité D de contrôle ou de gestion du réseau NET. Dans ce cas, le système SYS comporte les deux points d'accès b' et b, ainsi que cette entité D du réseau NET. Celle-ci comprend alors le module fonctionnel COM' décrit précédemment.

Dans le mode décrit en référence à la figure 6, le deuxième point d'accès b comporte un deuxième dispositif de réseau conforme à l'invention et met en oeuvre un procédé de sélection conforme à l'invention. Alternativement, le procédé de sélection peut être mis en oeuvre par une autre entité du réseau NET, distincte du deuxième point d'accès b, comme par exemple dans le cas d'un réseau NET centralisé, par une entité D de contrôle ou de gestion du réseau NET. Dans ce cas, le système SYS comporte les deux points d'accès b' et b, ainsi que cette entité D du réseau NET. L'entité D comprend alors les modules fonctionnels COM et PROC décrits précédemment.

On note que dans le cas d'un réseau NET centralisé, le premier dispositif de réseau selon l'invention et le deuxième dispositif de réseau selon l'invention peuvent être compris dans la même entité D de contrôle.

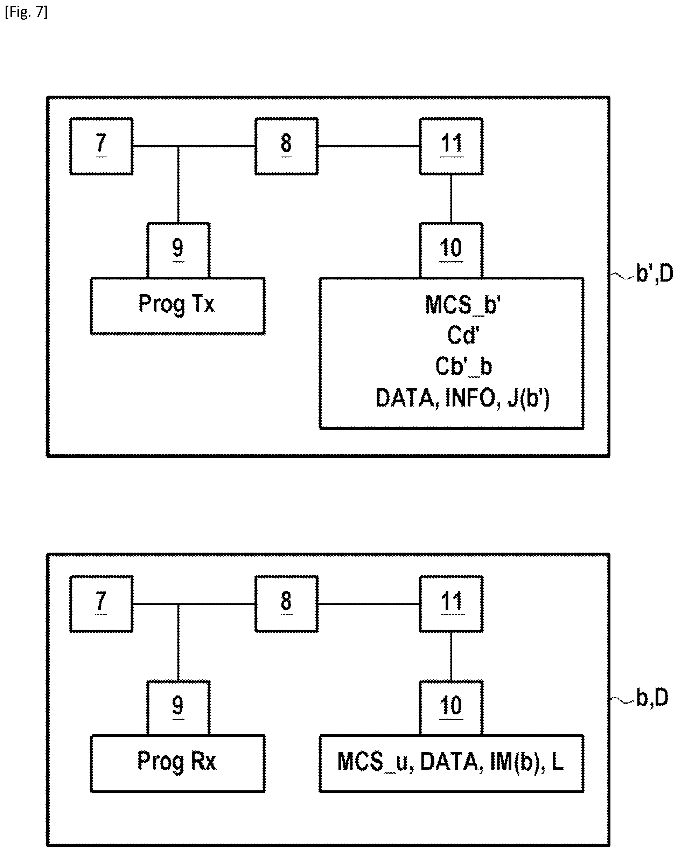

Dans les modes de réalisation décrits ici, le premier dispositif (qu'il soit compris dans un point d'accès b' ou dans une entité centrale de gestion D du réseau NET) et le deuxième dispositif (qu'il soit compris dans un point d'accès b ou dans une entité centrale de gestion D du réseau NET) conformes à l'invention, ont chacun l'architecture matérielle d'un ordinateur, telle qu'illustrée à la **figure 7.**

L'architecture du premier et du deuxième dispositif comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du premier dispositif selon l'invention constitue un support d'enregistrement conforme à l'invention, lisible par le processeur 7 et sur lequel est enregistré ici un programme d'ordinateur ProgTx conforme à l'invention.

La mémoire 10 du premier dispositif permet d'enregistrer des variables utilisées pour l'exécution des étapes du procédé de communication selon l'invention, telles que le premier ensemble de paramètres MCS_b', la capacité du canal descendant, Cd', la capacité du canal entre les points d'accès, Cb'_b, les données DATA, les informations INFO et l'ensemble des points interférés J(b').

Le programme d'ordinateur ProgTx définit des modules fonctionnels et logiciels ici, configurés pour communiquer des paramètres de transmission. Ces modules fonctionnels, tels que le module de communication COM', s'appuient sur et/ou commandent les éléments matériels 7-11 du premier dispositif cités précédemment.

La mémoire morte 9 du deuxième dispositif selon l'invention constitue un support d'enregistrement conforme à l'invention, lisible par le processeur 7 et sur lequel est enregistré ici un programme d'ordinateur ProgRx conforme à l'invention.

La mémoire 10 du deuxième dispositif permet d'enregistrer des variables utilisées pour l'exécution des étapes du procédé de sélection selon l'invention, telles que les données DATA, la liste L, le deuxième ensemble de paramètres MCS_u, et l'ensemble des points interféreurs IM(b).

Le programme d'ordinateur ProgRx définit des modules fonctionnels et logiciels ici, configurés pour sélectionner des paramètres de transmission. Ces modules fonctionnels, tels que le module de communication COM et le module de détermination PROC, s'appuient sur et/ou commandent les éléments matériels 7-11 du deuxième dispositif cités précédemment.

## Revendications

1. Procédé de communication par un premier dispositif (b', D) d'un réseau de communication sans fil (NET) comprenant un premier (b') point d'accès au réseau et au moins un deuxième (b, JM(b')) point d'accès au réseau, le premier point d'accès générant lors d'une communication sur un canal descendant (DL') établi avec un premier terminal (d') un signal d'interférence (INT) affectant au moins une communication dudit au moins un deuxième point d'accès sur au moins un canal montant établi avec au moins un deuxième terminal, **caractérisé en ce que** ledit premier point d'accès (b') utilise lors de ladite communication sur le canal descendant (DL') une ressource utilisée par ledit au moins un deuxième point d'accès (b) lors de ladite au moins une communication sur ledit au moins un canal montant (UL) et ledit procédé comprend :

   - une étape de détermination (E100, E102, E402) d'un ensemble de paramètres de transmission (MCS_b') utilisé par le premier point d'accès (b') lors de ladite communication avec le premier terminal sur ledit canal descendant en fonction d'une estimation (E110) d'une qualité d'au moins un canal de propagation sans fil (PR_INT) entre ledit premier point d'accès (b') et ledit au moins un deuxième point d'accès (b), ledit ensemble (MCS_b') de paramètres de transmission étant déterminé de sorte à permettre audit au moins un deuxième point d'accès de détecter (E206, E506) dans un signal reçu par celui-ci, comprenant un signal transmis sur ledit canal montant (UL) par ledit deuxième terminal (u), ledit signal d'interférence (INT) créé par le premier point d'accès (b') lors de ladite communication sur ledit canal descendant (DL') ; et
   - une étape (E104, E404) d'envoi par ledit premier dispositif du réseau audit au moins un deuxième point d'accès d'au moins une donnée (DATA) représentative dudit ensemble de paramètres de transmission (MCS_b').

2. Procédé selon la revendication 1 dans lequel le premier point d'accès utilise lors de ladite communication sur le canal descendant, une ressource utilisée par ledit au moins un deuxième point d'accès lors de ladite au moins une communication sur ledit au moins un canal montant.

3. Procédé selon l'une des revendications 1 ou 2 dans lequel l'estimation de ladite qualité dudit au moins un canal de propagation (PR_INT) comprend une estimation d'une capacité (Cb'_b) dudit au moins un canal de propagation ou une estimation d'un rapport signal sur interférences-plus-bruit sur ledit au moins un canal de propagation.

4. Procédé selon l'une quelconque des revendications 1 à 3 dans lequel :

   - si une capacité (Cd') dudit canal descendant (DL') est inférieure ou égale à une capacité (Cb'_b) dudit au moins un canal de propagation entre ledit premier (b') et ledit au moins un deuxième point d'accès (b), ledit ensemble de paramètres de transmission (MCS_b') est déterminé (E150) de sorte à maximiser une valeur d'un débit (Rd') transmis sur ledit canal descendant (DL') dans la limite de la capacité du canal descendant (Cd') ; et/ou
   - si ladite capacité (Cd') dudit canal descendant (DL') est supérieure à ladite capacité (Cb'_b) d'au moins un canal de propagation entre ledit premier point d'accès (b') et ledit au moins un deuxième point d'accès (b), ledit ensemble de paramètres de transmission (MCS_b') est déterminé (E140) de sorte à maximiser la valeur de débit (Rd') transmis sur ledit canal descendant dans la limite de ladite capacité (Cb'_b) du canal de propagation entre ledit premier et ledit deuxième point d'accès (b', b).

5. Procédé selon l'une des revendications 1 à 4 comportant en outre :

- une étape d'obtention (E400) d'au moins une information (INFO) identifiant au moins un point d'accès (IM(b)) dit interféreur du réseau générant lors d'une communication sur un canal descendant (DL') un signal d'interférence affectant une communication d'un autre point d'accès, dit interféré (b), sur un canal montant (UL) ;
- une étape de détermination (E401), à partir de ladite au moins une information obtenue (INFO), d'un ensemble (J(b')) de points d'accès interférés pour lesquels ledit premier point d'accès (b') est identifié comme un dit point d'accès interféreur, ledit au moins un deuxième point d'accès (b) appartenant audit ensemble déterminé (J(b')).

6. Procédé de sélection par un deuxième dispositif (b, D) d'un réseau de communication sans fil, d'un ensemble de paramètres de transmission (MCS_u), dit deuxième ensemble, destiné à être utilisé lors d'une communication par un terminal (u), dit deuxième terminal, sur un canal montant (UL) établi avec un point d'accès audit réseau, dit deuxième point d'accès, **caractérisé en ce que** cette communication est affectée par au moins un signal d'interférence généré par au moins un premier point d'accès (b') au réseau de communication sans fil lors d'au moins une communication sur au moins un canal descendant (DL') établi avec au moins un premier terminal (d'), ledit au moins un premier point d'accès (b') utilisant lors de ladite communication sur le canal descendant (DL') une ressource utilisée par ledit au moins un deuxième point d'accès (b) lors de ladite au moins une communication sur ledit au moins un canal montant (UL), ledit procédé comprenant des étapes de :

- obtention (E100, E200, E500) d'au moins une donnée (DATA) représentative d'au moins un premier ensemble de paramètres de transmission (MCS_b') utilisé par ledit au moins un premier point d'accès (b') sur ledit au moins un canal descendant (DL') ;
- détermination (E202, E502) en fonction de ladite au moins une donnée obtenue (DATA), dudit deuxième ensemble de paramètres de transmission (MCS_u), ledit deuxième ensemble de paramètres de transmission étant différent dudit au moins un premier ensemble de paramètres de transmission.

7. Procédé selon la revendication 6 dans lequel ledit deuxième ensemble de paramètres de transmission est déterminé (E202, E502) de sorte à maximiser un débit transmis sur ledit canal montant (UL) dans la limite d'une capacité (Cu) dudit canal montant.

8. Procédé selon l'une quelconque des revendications 6 ou 7 comprenant en outre :

- une étape de détermination (E380) d'au moins un point d'accès du réseau dit interféreur (b', IM(b)) pour le deuxième point d'accès, générant sur un canal descendant (DL') établi avec un terminal un signal d'interférence affectant une communication du deuxième point d'accès (b) sur ledit canal montant (UL) ; et
- une étape de fourniture (E390) à un premier dispositif du réseau (b', D) d'au moins une information (INFO) identifiant ledit au moins un point d'accès interféreur déterminé et destinée à être utilisée par ledit premier dispositif du réseau pour déterminer un ensemble de paramètres de transmission dudit au moins un point d'accès interféreur déterminé.

9. Procédé selon l'une des revendications 1 à 8 dans lequel lesdits ensembles (MCS_b', MCS_u) de paramètres de transmission comportent au moins un paramètre parmi :

- un schéma de modulation ;
- un schéma de codage ; et
- un niveau de puissance.

10. Procédé selon l'une des revendications 1 à 9 dans lequel au moins ledit deuxième point d'accès (b) fonctionne en mode Full-Duplex.

11. Dispositif (b', D) d'un réseau de communication sans fil comprenant un premier (b') point d'accès au réseau et au moins un deuxième (b, J(b')) point d'accès au réseau, le premier point d'accès générant lors d'une communication sur un canal descendant établi avec un premier terminal un signal d'interférence affectant au moins une communication dudit au moins un deuxième point d'accès sur au moins un canal montant établi avec au moins un deuxième terminal, **caractérisé en ce que** le dispositif du réseau, dit premier dispositif, est configuré pour effectuer ladite communication sur le canal descendant (DL') avec ledit premier point d'accès (b') utilisant une ressource utilisée par ledit au moins un deuxième point d'accès (b) lors de ladite au moins une communication sur ledit au moins un canal montant (UL) et comprend :

- des moyens de détermination d'un ensemble de paramètres de transmission utilisé par le premier point d'accès (b') lors de ladite communication avec le premier terminal sur ledit canal descendant en fonction d'une estimation d'une qualité d'au moins un canal de propagation sans fil entre ledit premier point d'accès (b') et ledit au moins un deuxième point d'accès (b), ledit ensemble (MCS_b') de paramètres de transmission étant déterminé de sorte à permettre audit au moins un deuxième point d'accès de détecter dans un signal reçu par celui-ci, comprenant un signal transmis sur ledit canal montant (UL) par ledit deuxième terminal (u), ledit signal d'interférence (INT) créé par le premier point d'accès (b') lors de ladite communication sur ledit canal descendant (DL') ;
- un module de communication (COM') configuré pour envoyer audit au moins un deuxième point d'accès (b) au moins une donnée représentative dudit ensemble de paramètres de transmission (MCS_b').

12. Dispositif (b, D) d'un réseau de communication sans fil, dit deuxième dispositif, configuré pour sélectionner pour un point d'accès audit réseau, dit deuxième point d'accès, un ensemble de paramètres de transmission (MCS_u), dit deuxième ensemble, destiné à être utilisé par un terminal, dit deuxième terminal, lors d'une communication sur un canal montant établi avec le deuxième point d'accès, **caractérisé en ce que** cette communication est affectée par au moins un signal d'interférence généré par au moins un premier point d'accès (b') au réseau de communication sans fil lors d'au moins une communication sur au moins un canal descendant établi avec au moins un premier terminal, ledit au moins un premier point d'accès (b') étant configuré pour utiliser lors de ladite communication sur le canal descendant (DL') une ressource utilisée par ledit au moins un deuxième point d'accès (b) lors de ladite au moins une communication sur ledit au moins un canal montant (UL), ledit deuxième dispositif (b) comprenant :

- un module de communication (COM) configuré pour obtenir au moins une donnée représentative d'au moins un premier ensemble de paramètres de transmission (MCS_b') utilisé par ledit au moins un premier point d'accès (b') lors de ladite au moins une communication sur ledit au moins un canal descendant ; et
- un module de détermination (PROC) configuré pour déterminer en fonction de ladite au moins une donnée obtenue, ledit deuxième ensemble de paramètres de transmission (MCS_u), ledit deuxième ensemble de paramètres de transmission étant différent dudit au moins un premier ensemble de paramètres de transmission.

13. Système dans un réseau de communications sans fil, **caractérisé en ce que** ledit système comporte :

- au moins un premier dispositif du réseau selon la revendication 11 ;
- un premier point d'accès (b') audit réseau ; et
- au moins un deuxième point d'accès (b) audit réseau ; et
- au moins un deuxième dispositif selon la revendication 12.

14. Système selon la revendication 13 dans lequel le premier dispositif du réseau est compris dans le premier point d'accès et / ou le deuxième dispositif du réseau est compris dans le deuxième point d'accès.

15. Système selon la revendication 13 dans lequel le premier dispositif du réseau et le deuxième dispositif du réseau sont compris dans une entité de gestion centralisée du réseau apte à communiquer avec le premier point d'accès et le deuxième point d'accès.

**Patentansprüche**

1. Kommunikationsverfahren durch eine erste Vorrichtung (b', D) eines drahtlosen Kommunikationsnetzes (NET), das einen ersten (b') Zugangspunkt zum Netz und mindestens einen zweiten (b, JM(b')) Zugangspunkt zum Netz umfasst, wobei der erste Zugangspunkt bei einer Kommunikation auf einem mit einem ersten Endgerät (d') aufgebauten Abwärtskanal (DL') ein Interferenzsignal (INT) erzeugt, das mindestens eine Kommunikation des mindestens einen zweiten Zugangspunkts auf mindestens einem mit mindestens einem zweiten Endgerät aufgebauten Aufwärtskanal beeinflusst, **dadurch gekennzeichnet, dass** der erste Zugangspunkt (b') bei der Kommunikation auf dem Abwärtskanal (DL') eine Ressource nutzt, die von dem mindestens einen zweiten Zugangspunkt (b) bei der mindestens einen Kommunikation auf dem mindestens einen Aufwärtskanal (UL) genutzt wird, und das Verfahren umfasst:

- einen Schritt des Bestimmens (E100, E102, E402) einer Gesamtheit von Übertragungsparametern (MCS_b'), die vom ersten Zugangspunkt (b') bei der Kommunikation mit dem ersten Endgerät auf dem Abwärtskanal verwendet wird, in Abhängigkeit von einer Schätzung (E110) einer Qualität mindestens eines drahtlosen Ausbreitungskanals (PR_INT) zwischen dem ersten Zugangspunkt (b') und dem mindestens einen zweiten Zugangspunkt (b), wobei die Gesamtheit (MCS_b') von Übertragungsparametern so bestimmt wird, dass mindestens einem zweiten Zugangspunkt ermöglicht wird, in einem von diesem empfangenen Signal, das ein vom zweiten Endgerät (u) auf dem Aufwärtskanal (UL) übertragenes Signal umfasst, das Interferenzsignal (INT) zu erkennen (E206, E506), das vom ersten Zugangspunkt (b') bei der Kommunikation auf dem Abwärtskanal (DL') erzeugt wird; und

- einen Schritt (E104, E404) des Sendens mindestens eines für die Gesamtheit der Übertragungsparameter (MCS_b') repräsentativen Datums (DATA) durch die erste Vorrichtung des Netzes an den mindestens einen zweiten Zugangspunkt.

2. Verfahren nach Anspruch 1, wobei der erste Zugangspunkt bei der Kommunikation auf dem Abwärtskanal eine Ressource nutzt, die von dem mindestens einen zweiten Zugangspunkt bei der mindestens einen Kommunikation auf dem mindestens einen Aufwärtskanal genutzt wird.

3. Verfahren nach einem der Ansprüche 1 oder 2, wobei die Schätzung der Qualität des mindestens einen Ausbreitungskanals (PR_INT) einen Schätzung einer Kapazität (Cb'_b) des mindestens einen Ausbreitungskanals oder eine Schätzung des Verhältnisses Signal zu Interferenz plus Rauschen auf dem mindestens einen Ausbreitungskanal umfasst.

4. Verfahren nach einem der Ansprüche 1 bis 3, wobei:

- wenn eine Kapazität (Cd') des Abwärtskanals (DL') kleiner oder gleich einer Kapazität (Cb'_b) des mindestens einen Ausbreitungskanals zwischen dem ersten (b') und dem mindestens einen zweiten Zugangspunkt (b) ist, die Gesamtheit der Übertragungsparameter (MCS_b') so bestimmt wird (E150), dass eine Übertragungsrate (Rd') auf dem Abwärtskanal (DL') innerhalb der Grenze des der Kapazität Abwärtskanals (Cd') maximiert wird; und/oder

- wenn die Kapazität (Cd') des Abwärtskanals (DL') größer als die Kapazität (Cb'_b) des mindestens einen Ausbreitungskanals zwischen dem ersten Zugangspunkt (b') und dem mindestens einen zweiten Zugangspunkt (b) ist, die Gesamtheit der Übertragungsparameter (MCS_b') so bestimmt wird (E140), dass die Übertragungsrate (Rd') auf dem Abwärtskanal innerhalb der Grenze der Kapazität (Cb'_b) des Ausbreitungskanals zwischen dem ersten und dem zweiten Zugangspunkt (b', b) maximiert wird.

5. Verfahren nach einem der Ansprüche 1 bis 4, das außerdem umfasst:

- einen Schritt des Erhaltens (E400) mindestens einer Information (INFO), die mindestens einen niedriger genannten Zugangspunkt (IM(b)) des Netzes bezeichnet, der bei einer Kommunikation auf einem Abwärtskanal (DL') ein Interferenzsignal erzeugt, das eine Kommunikation mit einem anderen interferiert genannten (b) Zugangspunkt auf einem Aufwärtskanal (UL) beeinflusst;

- einen Schritt des Bestimmens (E401) einer Gesamtheit (J(b')) interferierter Zugangspunkte, für die der erste Zugangspunkt (b') als niedrigerer Zugangspunkt bezeichnet wird, auf Grundlage der mindestens einen erhaltenen Information (INFO), wobei der mindestens eine zweite Zugangspunkt (b) zu der bestimmten Gesamtheit (J(b')) gehört.

6. Verfahren zur Auswahl einer zweite Gesamtheit genannten Gesamtheit von Übertragungsparametern (MCS_u), die dazu bestimmt ist, bei einer Kommunikation von einem zweites Endgerät genannten Endgerät (u) auf einem mit einem zweiter Zugangspunkt genannten Zugangspunkt zum Netz aufgebauten Aufwärtskanal (UL) verwendet zu werden, durch eine zweite Vorrichtung (b, D) eines drahtlosen Kommunikationsnetzes, **dadurch gekennzeichnet, dass** diese Kommunikation durch mindestens ein Interferenzsignal beeinflusst wird, das durch mindestens einen ersten Zugangspunkt (b') zum drahtlosen Kommunikationsnetz bei mindestens einer Kommunikation auf mindestens einem mit mindestens einem ersten Endgerät (d') aufgebauten Abwärtskanal (DL') erzeugt wird, wobei der mindestens eine Zugangspunkt (b') bei der Kommunikation auf dem Abwärtskanal (DL') eine Ressource nutzt, die von dem mindestens einen zweiten Zugangspunkt (b) bei der mindestens einen Kommunikation auf dem mindestens einen Aufwärtskanal (UL) genutzt wird, wobei das Verfahren folgende Schritte umfasst:

- Erhalten (E100, E200, E500) mindestens eines Datums (DATA), das für mindestens eine erste Gesamtheit von Übertragungsparametern (MCS_b'), die von dem mindestens einen ersten Zugangspunkt (b') auf dem mindestens einen Abwärtskanal (DL') verwendet wird, repräsentativ ist; - Bestimmen (E202, E502) der zweiten Gesamtheit von Übertragungsparametern (MCS_u) in Abhängigkeit von dem mindestens einen erhaltenen Datum (DATA), wobei die zweite Gesamtheit von Übertragungsparametern von der mindestens einen ersten Gesamtheit von Übertragungsparametern verschieden ist.

**7.** Verfahren nach Anspruch 6, wobei die zweite Gesamtheit von Übertragungsparametern so bestimmt wird (E202, E502), dass eine Übertragungsrate auf dem Aufwärtskanal (UL) innerhalb der Grenze einer Kapazität (Cu) des Aufwärtskanals maximiert wird.

**8.** Verfahren nach einem der Ansprüche 6 oder 7, das außerdem umfasst:

- einen Schritt des Bestimmens (E380) mindestens eines Zugangspunkts des niedriger genannten Zugangspunkts (b', IM(b)) des Netzes für den zweiten Zugangspunkt, der auf dem mit einem Endgerät aufgebauten Abwärtskanal (DL') ein Interferenzsignal erzeugt, das eine Kommunikation des zweiten Zugangspunkts (b) auf dem Aufwärtskanal (UL) beeinflusst; und
- einen Schritt des Bereitstellens (E390) mindestens einer Information (INFO), die den mindestens einen bestimmten niedrigeren Zugangspunkt bezeichnet und dazu bestimmt ist, von der ersten Vorrichtung des Netzes genutzt zu werden, um eine Gesamtheit von Übertragungsparametern des mindestens einen bestimmten niedrigeren Zugangspunkts zu bestimmen, an eine erste Vorrichtung des Netzes (b', D).

**9.** Verfahren nach einem der Ansprüche 1 bis 8, wobei die Gesamtheiten (MCS-b', MCS_u) von Übertragungsparametern mindestens einen Parameter umfassen aus:

- einem Modulationsschema;
- einem Codierungsschema; und
- einer Leistungsstufe.

**10.** Verfahren nach einem der Ansprüche 1 bis 9, wobei der mindestens eine zweite Zugangspunkt (b) im Full-Duplex-Modus arbeitet.

**11.** Vorrichtung (b', D) eines drahtlosen Kommunikationsnetzes, das einen ersten (b') Zugangspunkt zum Netz und mindestens einen zweiten (b; J(b')) Zugangspunkt zum Netz umfasst, wobei der erste Zugangspunkt bei einer Kommunikation auf einem mit einem ersten Endgerät aufgebauten Abwärtskanal ein Interferenzsignal erzeugt, das mindestens eine Kommunikation des mindestens einen zweiten Zugangspunkts auf mindestens einem mit einem zweiten Endgerät aufgebauten Aufwärtskanal beeinflusst, **dadurch gekennzeichnet, dass** die erste Vorrichtung genannte Vorrichtung des Netzes dazu konfiguriert ist, die Kommunikation auf dem Abwärtskanal (DL') mit dem ersten Zugangspunkt (b') durchzuführen, der eine Ressource nutzt, die von dem mindestens einen zweiten Zugangspunkt (b) bei der mindestens einen Kommunikation auf dem mindestens einen Aufwärtskanal (UL) genutzt wird, und umfasst:

- Mittel zur Bestimmung einer Gesamtheit von Übertragungsparametern, die vom ersten Zugangspunkt (b') bei der Kommunikation mit dem ersten Endgerät auf dem Abwärtskanal genutzt wird, in Abhängigkeit von einer Schätzung einer Qualität mindestens eines drahtlosen Ausbreitungskanals zwischen dem ersten Zugangspunkt (b') und dem mindestens einen zweiten Zugangspunkt (b), wobei die Gesamtheit (MCS_b') von Übertragungsparametern so bestimmt wird, dass mindestens einem zweiten Zugangspunkt ermöglicht wird, in einem von diesem empfangenen Signal, das ein vom zweiten Endgerät (u) auf dem Aufwärtskanal (UL) übertragenes Signal umfasst, das Interferenzsignal (INT) zu erkennen, das vom ersten Zugangspunkt (b') bei der Kommunikation auf dem Abwärtskanal (DL') erzeugt wird;
- ein Kommunikationsmodul (COM'), das dazu konfiguriert ist, an den mindestens einen zweiten Zugangspunkt (b) mindestens ein Datum zu senden, das für die Gesamtheit der Übertragungsparameter (MCS_b') repräsentativ ist.

**12.** Zweite Vorrichtung genannte Vorrichtung (b, D) eines drahtlosen Kommunikationsnetzes, die dazu konfiguriert ist, für einen zweiter Zugangspunkt genannten Zugangspunkt zum Netz eine zweite Gesamtheit genannte Gesamtheit von Übertragungsparametern (MCS_u) auszuwählen, die dazu bestimmt ist, von einem zweites Endgerät genannten Endgerät bei einer Kommunikation auf einem mit dem zweiten Zugangspunkt aufgebauten Aufwärtskanal verwendet zu werden, **dadurch gekennzeichnet, dass** diese Kommunikation durch mindestens ein Interferenzsignal beeinflusst wird, das durch mindestens einen ersten Zugangspunkt (b') zum drahtlosen Kommunikationsnetz bei mindestens einer Kommunikation auf mindestens einem mit mindestens einem ersten Endgerät aufgebauten Abwärtskanal erzeugt wird, wobei der mindestens eine erste Zugangspunkt (b') dazu konfiguriert ist, bei der Kommunikation auf dem Abwärtskanal (DL') eine Ressource zu nutzen, die von dem mindestens einen zweiten Zugangspunkt (b) bei der mindestens einen Kommunikation auf dem mindestens einen Aufwärtskanal (UL) genutzt wird, wobei die zweite Vorrichtung (b) umfasst:

- ein Kommunikationsmodul (COM), das dazu konfiguriert ist, mindestens ein Datum zu erhalten, das für mindestens eine erste Gesamtheit von Übertragungsparametern (MCS_b') repräsentativ ist, die von dem mindestens einen ersten Zugangspunkt (b') bei der mindestens einen Kommunikation auf dem mindestens einen Abwärtskanal verwendet wird; und

- ein Bestimmungsmodul (PROC), das dazu konfiguriert ist, in Abhängigkeit von dem mindestens einen erhaltenen Datum die zweite Gesamtheit von Übertragungsparametern (MCS_u) zu bestimmen, wobei die zweite Gesamtheit von Übertragungsparametern von der mindestens einen ersten Gesamtheit von Übertragungsparametern verschieden ist.

13. System in einem drahtlosen Kommunikationsnetz, **dadurch gekennzeichnet, dass** das System umfasst:

- mindestens eine erste Vorrichtung des Netzes nach Anspruch 11;
- einen ersten Zugangspunkt (b') zum Netz; und
- mindestens einen zweiten Zugangspunkt (b) zum Netz; und
- mindestens eine zweite Vorrichtung nach Anspruch 12.

14. System nach Anspruch 13, wobei die erste Vorrichtung des Netzes im ersten Zugangspunkt umfasst ist und/oder die zweite Vorrichtung im zweiten Zugangspunkt umfasst ist.

15. System nach Anspruch 13, wobei die erste Vorrichtung des Netzes und die zweite Vorrichtung des Netzes in einer zentralisierten Verwaltungseinheit des Netzes umfasst sind, die fähig ist, mit dem ersten Zugangspunkt und dem zweiten Zugangspunkt zu kommunizieren.

**Claims**

1. Method for communication by a first device (b', D) of a wireless communication network (NET) comprising a first (b') point of access to the network and at least one second (b, JM(b')) point of access to the network, the first access point generating, during a communication over a downlink channel (DL') established with a first terminal (d'), an interference signal (INT) affecting at least one communication of said at least one second access point over at least one uplink channel established with at least one second terminal, **characterized in that** said first access point (b') uses, during said communication over the downlink channel (DL'), a resource used by said at least one second access point (b) during said at least one communication over said at least one uplink channel (UL) and said method comprises:

- a step of determining (E100, E102, E402) a set of transmission parameters (MCS_b') which is used by the first access point (b') during said communication with the first terminal over said downlink channel depending on an estimate (E110) of a quality of at least one wireless propagation channel (PR_INT) between said first access point (b') and said at least one second access point (b), said set (MCS_b') of transmission parameters being determined so as to make it possible for said at least one second access point to detect (E206, E506), in a signal received by it, comprising a signal transmitted over said uplink channel (UL) by said second terminal (u), said interference signal (INT) created by the first access point (b') during said communication over said downlink channel (DL'); and
- a step (E104, E404) of said first device of the network sending, to said at least one second access point, at least one datum (DATA) which is representative of said set of transmission parameters (MCS_b').

2. Method according to Claim 1, in which the first access point uses, during said communication over the downlink channel, a resource used by said at least one second access point during said at least one communication over said at least one uplink channel.

3. Method according to one of Claims 1 and 2, in which estimating said quality of said at least one propagation channel (PR_INT) comprises estimating a capacity (Cb'_b) of said at least one propagation channel or estimating a signal-to-interference-plus-noise ratio over said at least one propagation channel.

4. Method according to any one of Claims 1 to 3, in which:

- if a capacity (Cd') of said downlink channel (DL') is less than or equal to a capacity (Cb'_b) of said at least one propagation channel between said first (b') and said at least one second access point (b), said set of transmission parameters (MCS_b') is determined (E150) so as to maximize a value of a throughput (Rd') transmitted over said downlink channel (DL') within the limits of the capacity of the downlink channel (Cd'); and/or
- if said capacity (Cd') of said downlink channel (DL') is greater than said capacity (Cb'_b) of said at least one propagation channel between said first access point (b') and said at least one second access point (b), said set of transmission parameters (MCS_b') is determined (E140) so as to maximize the value of throughput (Rd') transmitted over said downlink channel within the limits of said capacity (Cb'_b) of the propagation channel between said first and said second access point (b', b).

5. Method according to one of Claims 1 to 4, further comprising:

- a step of obtaining (E400) at least one piece of information (INFO) identifying at least one access point (IM(b)), referred to as the interfering access point, of the network generating, during a communication over a downlink channel (DL'), an interference signal affecting a communication of another access point, referred to as the interfered-with access point (b), over an uplink channel (UL);
- a step of determining (E401), on the basis of said at least one obtained piece of information (INFO), a set (J(b')) of interfered-with access points for which said first access point (b') is identified as a said interfering access point, said at least one second access point (b) belonging to said determined set (J(b')).

6. Method for selection, by a second device (d, D) of a wireless communication network, of a set of transmission parameters (MCS_u), referred to as the second set, which is intended to be used during a communication by a terminal (u), referred to as the second terminal, over an uplink channel (UL) established with a point of access to said network, referred to as the second access point, **characterized in that** this communication is affected by at least one interference signal generated by at least one first point of access (b') to the wireless communication network during at least one communication over at least one downlink channel (DL') established with at least one first terminal (d'), said at least one first access point (b') using, during said communication over the downlink channel (DL'), a resource used by said at least one second access point (b) during said at least one communication over said at least one uplink channel (UL), said method comprising steps of:

- obtaining (E100, E200, E500) at least one datum (DATA) which is representative of at least one first set of transmission parameters (MCS_b') which is used by said at least one first access point (b') over said at least one downlink channel (DL');
- determining (E202, E502), depending on said at least one obtained datum (DATA), said second set of transmission parameters (MCS_u), said second set of transmission parameters being different from said at least one first set of transmission parameters.

7. Method according to Claim 6, in which said second set of transmission parameters is determined (E202, E502) so as to maximize a throughput transmitted over said uplink channel (UL) within the limits of a capacity (Cu) of said uplink channel.

8. Method according to either one of Claims 6 and 7, further comprising:

- a step of determining (E380) at least one access point of the network, referred to as the interfering access point (b', IM(b)) for the second access point, generating, over a downlink channel (DL') established with a terminal, an interference signal affecting a communication of the second access point (b) over said uplink channel (UL); and
- a step of providing (E390), to a first device of the network (b', D), at least one piece of information (INFO) identifying said at least one determined interfering access point and intended to be used by said first device of the network to determine a set of transmission parameters of said at least one determined interfering access point.

9. Method according to one of Claims 1 to 8, in which said sets (MCS_b', MCS_u) of transmission parameters comprise at least one parameter from among:

- a modulation scheme;
- a coding scheme; and
- a power level.

10. Method according to one of Claims 1 to 9, in which at least said second access point (b) operates in full duplex mode.

11. Device (b', D) of a wireless communication network comprising a first (b') point of access to the network and at least one second (b, J(b')) point of access to the network, the first access point generating, during a communication over a downlink channel established with a first terminal, an interference signal affecting at least one communication of said at least one second access point over at least one uplink channel established with at least one second terminal, **characterized in that** the device of the network, referred to as the first device, is configured to carry out said communication over the downlink channel (DL') with said first access point (b') using a resource used by said at least one second access point (b) during said at least one communication over said at least one uplink channel (UL) and comprises:

- means for determining a set of transmission parameters which is used by the first access point (b') during said communication with the first terminal over said downlink channel depending on an estimate of a quality of at least one wireless propagation channel between said first access point (b') and said at least one second access point (b), said set (MCS_b') of transmission parameters being determined so as to make it possible for said at least one second access point to detect, in a signal received by it, comprising a signal transmitted over said uplink channel (UL) by said second terminal (u), said interference signal (INT) created by the first access point (b') during said communication over said downlink channel (DL');
- a communication module (COM') configured to send, to said at least one second access point (b), at least one datum which is representative of said set of transmission parameters (MCS_b').

12. Device (b, D) of a wireless communication network, referred to as the second device, configured to select, for a point of access to said network, referred to as the second access point, a set of transmission parameters (MCS_u), referred to as the second set, which is intended to be used by a terminal, referred to as the second terminal, during a communication over an uplink channel established with the second access point, **characterized in that** this communication is affected by at least one interference signal generated by at least one first point of access (b') to the wireless communication network during at least one communication over at least one downlink channel established with at least one first terminal, said at least one first access point (b') being configured to use, during said communication over the downlink channel (DL'), a resource used by said at least one second access point (b) during said at least one communication over said at least one uplink channel (UL), said second device (b) comprising:

- a communication module (COM) configured to obtain at least one datum which is representative of at least one first set of transmission parameters (MCS_b') which is used by said at least one first access point (b') during said at least one communication over said at least one downlink channel; and
- a determination module (PROC) configured to determine, depending on said at least one obtained datum, said second set of transmission parameters (MCS_u), said second set of transmission parameters being different from said at least one first set of transmission parameters.

13. System in a wireless communication network, **characterized in that** said system comprises:

- at least one first device of the network according to Claim 11;
- a first point of access (b') to said network; and
- at least one second point of access (b) to said network; and
- at least one second device according to Claim 12.

14. System according to Claim 13, in which the first device of the network is contained in the first access point and/or the second device of the network is contained in the second access point.

15. System according to Claim 13, in which the first device of the network and the second device of the network are contained in a centralized management entity of the network which is able to communicate with the first access point and the second access point.

[Fig. 1]

[Fig. 2]

[Fig. 3]

[Fig. 4]

[Fig. 5]

[Fig. 6]

[Fig. 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3416344 A1
- WO 2015060510 A1
- US 2018091282 A1